# EUROPEAN PATENT APPLICATION

(11) **EP 4 560 000 A2**
(43) Date of publication of application: **28.05.2025**
(21) Application number: 25170435.9
(22) Date of filing: 17.03.2017
(51) Int. Cl.: C11D 7/50

(54) **AZEOTROPIC AND AZEOTROPE-LIKE COMPOSITIONS OF Z-1233ZD**

(30) Priority: 24.03.2016 US 201662312694 P
(62) Divisional of application: 17714369.0
(71) Applicant: The Chemours Company FC, LLC, Wilmington, Delaware 19801 (US)
(72) Inventor: Robin, Mark L., Middletown 19709 (US)
(74) Representative: Abitz & Partner

(57) **Abstract**

This application provides azeotropic and near-azeotropic compositions of Z-1233zd and a second component selected from the group consisting of methyl formate, dimethoxymethane, HFC-43-10-mee and HFC-245fa. The inventive compositions are useful as aerosol propellants, refrigerants, cleaning agents, expansion agents for thermoplastic and thermoset foams, solvents, heat transfer media, gaseous dielectrics, fire extinguishing and suppression agents, power cycle working fluids, polymerization media, particulate removal fluids, carrier fluids, buffing abrasive agents, and displacement drying agents. The compositions were modeled based on Vapor-Liquid Equilibria data such as those illustrated in the figures.

## Description

### BACKGROUND OF THE INVENTION

### Field of the Disclosure

The present invention relates to the discovery of azeotropic or azeotrope-like compositions which include Z -1-chloro-3,3,3-trifluoropropene. These compositions are useful as aerosol propellants, refrigerants, cleaning agents, expansion agents ("blowing agents") for the production of thermoplastic and thermoset foams, heat transfer media, gaseous dielectrics, solvents, fire extinguishing and suppression agents, power cycle working fluids, polymerization media, particulate removal fluids, carrier fluids, buffing abrasive agents, and displacement drying agents.

### Description of Related Art

Many industries have been working for the past few decades to find replacements for the ozone depleting chlorofluorocarbons (CFCs) and hydrochlorofluorocarbons (HCFCs). The CFCs and HCFCs have been employed in a wide range of applications, including their use as aerosol propellants, refrigerants, cleaning agents, expansion agents for thermoplastic and thermoset foams, heat transfer media, gaseous dielectrics, fire extinguishing and suppression agents, power cycle working fluids, polymerization media, particulate removal fluids, carrier fluids, buffing abrasive agents, and displacement drying agents. In the search for replacements for these versatile compounds, many industries have turned to the use of hydrofluorocarbons (HFCs), hydrofluoroolefins (HFOs), and hydrochlorofluoroolefins (HCFOs).

The HFCs do not contribute to the destruction of stratospheric ozone, but are of concern due to their contribution to the "greenhouse effect," i.e., they contribute to global warming. As a result, they have come under scrutiny, and their widespread use may also be limited in the future. Unlike HFCs, many HFOs and HCFOs do not contribute to the greenhouse effect, as they react and decompose in the atmosphere relatively quickly. However, HFOs such as HFO-1234ze and HCFOs such as E-HCFO-1233zd have been found to be too unstable for many applications.

### SUMMARY OF THE INVENTION

Mixtures of certain hydrocarbons or fluorocarbons that include Z-1-chloro-3,3,3-trifluoropropene (Z-CF₃CH=CHCl, Z-1233zd) are believed to function as potential candidates for replacement of CFCs and HCFCs, but to display low global warming potentials ("GWPs"), and not contribute to the destruction of stratospheric ozone.

In Embodiment 1.0, there is provided a composition comprising Z-1233zd and a second component selected from the group consisting of:
a) Methyl formate;
b) Dimethoxymethane;
c) HFC-43-10-mee; and,
d) HFC-245fa,
wherein the second component is present in an effective amount to form an azeotrope or azeotrope-like mixture with the Z-1233zd.

In Embodiment 2.0, there is provided the composition according to Embodiment 1.0, wherein the second component is methyl formate.

In Embodiment 3.0, there is provided the composition according to Embodiment 1.0, wherein the second component is dimethoxymethane.

In Embodiment 4.0, there is provided the composition according to Embodiment 1.0, wherein the second component is HFC-43-10-mee.

In Embodiment 5.0, there is provided the composition according to Embodiment 1.0, wherein the second component is HFC-245fa.

In Embodiment 6.0, there is provided the composition according to Embodiment 1.0, further comprising an additive selected from the group consisting of lubricants, pour point modifiers, anti-foam agents, viscosity improvers, emulsifiers dispersants, oxidation inhibitors, extreme pressure agents, corrosion inhibitors, detergents, catalysts, surfactants, flame retardants, preservatives, colorants, antioxidants, reinforcing agents, fillers, antistatic agents, solubilizing agents, IR attenuating agents, nucleating agents, cell controlling agents, extrusion aids, stabilizing agents, thermally insulating agents, plasticizers, viscosity modifiers, impact modifiers, gas barrier resins, polymer modifiers, rheology modifiers, antibacterial agents, vapor pressure modifiers, UV absorbers, cross-linking agents, permeability modifiers, bitterants, propellants and acid catchers.

In Embodiment 6.1, there is provided the composition according to Embodiment 2.0, further comprising an additive selected from the group consisting of lubricants, pour point modifiers, anti-foam agents, viscosity improvers, emulsifiers dispersants, oxidation inhibitors, extreme pressure agents, corrosion inhibitors, detergents, catalysts, surfactants, flame retardants, preservatives, colorants, antioxidants, reinforcing agents, fillers, antistatic agents, solubilizing agents, IR attenuating agents, nucleating agents, cell controlling agents, extrusion aids, stabilizing agents, thermally insulating agents, plasticizers, viscosity modifiers, impact modifiers, gas barrier resins, polymer modifiers, rheology modifiers, antibacterial agents, vapor pressure modifiers, UV absorbers, cross-linking agents, permeability modifiers, bitterants, propellants and acid catchers.

In Embodiment 6.2, there is provided the composition according to Embodiment 3.0, further comprising an additive selected from the group consisting of lubricants, pour point modifiers, anti-foam agents, viscosity improvers, emulsifiers dispersants, oxidation inhibitors, extreme pressure agents, corrosion inhibitors, detergents, catalysts, surfactants, flame retardants, preservatives, colorants, antioxidants, reinforcing agents, fillers, antistatic agents, solubilizing agents, IR attenuating agents, nucleating agents, cell controlling agents, extrusion aids, stabilizing agents, thermally insulating agents, plasticizers, viscosity modifiers, impact modifiers, gas barrier resins, polymer modifiers, rheology modifiers, antibacterial agents, vapor pressure modifiers, UV absorbers, cross-linking agents, permeability modifiers, bitterants, propellants and acid catchers.

In Embodiment 6.3, there is provided the composition according to Embodiment 4.0, further comprising an additive selected from the group consisting of lubricants, pour point modifiers, anti-foam agents, viscosity improvers, emulsifiers dispersants, oxidation inhibitors, extreme pressure agents, corrosion inhibitors, detergents, catalysts, surfactants, flame retardants, preservatives, colorants, antioxidants, reinforcing agents, fillers, antistatic agents, solubilizing agents, IR attenuating agents, nucleating agents, cell controlling agents, extrusion aids, stabilizing agents, thermally insulating agents, plasticizers, viscosity modifiers, impact modifiers, gas barrier resins, polymer modifiers, rheology modifiers, antibacterial agents, vapor pressure modifiers, UV absorbers, cross-linking agents, permeability modifiers, bitterants, propellants and acid catchers.

In Embodiment 6.4, there is provided the composition according to Embodiment 5.0, further comprising an additive selected from the group consisting of lubricants, pour point modifiers, anti-foam agents, viscosity improvers, emulsifiers dispersants, oxidation inhibitors, extreme pressure agents, corrosion inhibitors, detergents, catalysts, surfactants, flame retardants, preservatives, colorants, antioxidants, reinforcing agents, fillers, antistatic agents, solubilizing agents, IR attenuating agents, nucleating agents, cell controlling agents, extrusion aids, stabilizing agents, thermally insulating agents, plasticizers, viscosity modifiers, impact modifiers, gas barrier resins, polymer modifiers, rheology modifiers, antibacterial agents, vapor pressure modifiers, UV absorbers, cross-linking agents, permeability modifiers, bitterants, propellants and acid catchers.

In Embodiment 7.0, there is provided a process of forming a foam comprising:
(a) adding a foamable composition to a blowing agent; and,
(b) reacting said foamable composition under conditions effective to form a foam,
wherein said blowing agent comprises the composition according to Embodiment 1.0.

In Embodiment 7.1, there is provided a process of forming a foam comprising:
(a) adding a foamable composition to a blowing agent; and,
(b) reacting said foamable composition under conditions effective to form a foam,
wherein said blowing agent comprises the composition according to Embodiment 2.0.

In Embodiment 7.2, there is provided a process of forming a foam comprising:
(a) adding a foamable composition to a blowing agent; and,
(b) reacting said foamable composition under conditions effective to form a foam,
wherein said blowing agent comprises the composition according to Embodiment 3.0.

In Embodiment 7.3, there is provided a process of forming a foam comprising:
(a) adding a foamable composition to a blowing agent; and,
(b) reacting said foamable composition under conditions effective to form a foam,
wherein said blowing agent comprises the composition according to Embodiment 4.0.

In Embodiment 7.4, there is provided a process of forming a foam comprising:
(a) adding a foamable composition to a blowing agent; and,
(b) reacting said foamable composition under conditions effective to form a foam,
wherein said blowing agent comprises the composition according to Embodiment 5.0.

In Embodiment 8.0, there is provided a foam formed by the process according to any of Embodiments 7.1 to 7.4.

In Embodiment 9.0, there is provided a foam comprising a polymer and the composition according to any of Embodiments 2.0-5.0.

In Embodiment 10.0, there is provided a pre-mix composition comprising a foamable component and a composition according to any of Embodiments 2.0-5.0 as a blowing agent.

In Embodiment 11.0, there is provided a process for producing refrigeration comprising condensing the composition according to any of Embodiments 2.0-5.0, and thereafter evaporating said composition in the vicinity of the body to be cooled.

In Embodiment 12.0, there is provided a heat transfer system comprising the composition according to any of Embodiments 2.0-5.0 as a heat transfer medium.

In Embodiment 13.0, there is provided a method of cleaning a surface comprising bringing the composition according to any of Embodiments 2.0-5.0 into contact with said surface.

In Embodiment 14.0, there is provided an aerosol product comprising a component to be dispensed and the composition according to any of Embodiment 2.0-5.0 as a propellant.

In Embodiment 15.0, there is provided a method for extinguishing or suppressing a flame comprising dispensing the composition according to any of Embodiments 2.0-5.0 at said flame.

In Embodiment 16.0, there is provided a system for preventing or suppressing a flame comprising a vessel containing the composition according to any of Embodiments 2.0-5.0 and a nozzle to dispense said composition toward an anticipated or actual location of said flame.

In Embodiment 17.0, there is provided a process for dissolving a solute comprising contacting and mixing said solute with a sufficient quantity of the composition according to any of Embodiments 2.0-5.0.

In Embodiment 18.0, there is provided a method for preventing or rapidly quenching an electric discharge in a space in a high voltage device comprising injecting the composition according to any of Embodiments 2.0-5.0 into said space as a gaseous dielectric.

In Embodiment 19.0, there is provided a high voltage device comprising the composition according to any of Embodiments 2.0-5.0 as a gaseous dielectric.

In Embodiment 20.0, there is provided the high voltage device according to Embodiment 19.0 selected from the group consisting of a transformer, a circuit breaker, a switch and a radar waveguide.

In Embodiment 21.0, there is provided an azeotropic or near-azeotropic composition according to any of the line entries of any of Tables 1.2, 1.3, 2.2, 2.3, 2.4, 3.2, 3.3, 4.2 and 4.3.

In Embodiment 22.0, there is provided the composition according to any of Embodiments 21.0, 21.1, 21.2, 21.3, 21.4 and 22.0, further comprising an additive selected from the group consisting of lubricants, pour point modifiers, anti-foam agents, viscosity improvers, emulsifiers dispersants, oxidation inhibitors, extreme pressure agents, corrosion inhibitors, detergents, catalysts, surfactants, flame retardants, preservatives, colorants, antioxidants, reinforcing agents, fillers, antistatic agents, solubilizing agents, IR attenuating agents, nucleating agents, cell controlling agents, extrusion aids, stabilizing agents, thermally insulating agents, plasticizers, viscosity modifiers, impact modifiers, gas barrier resins, polymer modifiers, rheology modifiers, antibacterial agents, vapor pressure modifiers, UV absorbers, cross-linking agents, permeability modifiers, bitterants, propellants and acid catchers.

### BRIEF SUMMARY OF THE DRAWINGS

FIG. 1 displays the vapor/liquid equilibrium curve for a mixture of Z-1233zd (cis-1233zd) and methyl formate at a temperature of 30 °C.
FIG. 2 displays the vapor/liquid equilibrium curve for a mixture of Z-1233zd (cis-1233zd) and dimethoxymethane (methylal) at 29.9 °C.
FIG. 3 displays the vapor/liquid equilibrium curve for a mixture of Z-1233zd (cis-1233zd) and HFC-43-10-mee (FC4310mee) at a temperature of 30 °C.
FIG. 4 displays the vapor/liquid equilibrium curve for a mixture of Z-1233zd (cis-1233zd) and HFC-245fa (FC245fa) at a temperature of 30 °C.

### DETAILED DESCRIPTION OF THE INVENTION

The present invention relates to azeotropic and near-azeotropic compositions of Z-1233zd with each of methyl formate, dimethoxymethane, HFC-43-10-mee and HFC-245fa.

Alternate designations for Z-1233zd include Z-1-chloro-3,3,3-trifluoropropene (Z-CF₃CH=CHCl), cis-1-chloro-3,3,3-trifluoropropene, cis-1233zd, Z-HFO-1233zd and cis-HFO-1233zd. Alternate designations for methyl formate (C₂H₄O₂) include MF and methyl methanoate. Alternate designations for dimethoxymethane (CH₃OCH₂OCH₃) include DMM, methylal and dimethylformal. Alternate designations for HFC-43-10-mee include 1,1,1,2,2,3,4,5,5,5-decafluoropentane and FC4310mee. Alternate designations for HFC-245fa include 1,1,1,3,3-pentafluoropropane and FC245fa.

The azeotrope or azeotrope-like compositions of the present invention can be prepared by any convenient method including mixing or combining the desired amounts. A preferred method is to weigh the desired component amounts and thereafter combine them in an appropriate container.

The inventive compositions can be used in a wide range of applications, including their use as aerosol propellants, refrigerants, solvents, cleaning agents, blowing agents (foam expansion agents) for thermoplastic and thermoset foams, heat transfer media, gaseous dielectrics, fire extinguishing and suppression agents, power cycle working fluids, polymerization media, particulate removal fluids, carrier fluids, buffing abrasive agents, and displacement drying agents.

As used herein, the terms "inventive compositions" and "compositions of the present invention" shall be understood to mean the azeotropic and near-azeotropic compositions of Z-1233zd and, a second component selected from the group consisting of methyl formate, dimethoxymethane, HFC-43-10-mee and HFC-245fa.

### Uses as a Heat Transfer Medium

The disclosed compositions can act as a working fluid used to carry heat from a heat source to a heat sink. Such heat transfer compositions may also be useful as a refrigerant in a cycle wherein the fluid undergoes a phase change; that is, from a liquid to a gas and back, or vice versa.

Examples of heat transfer systems include but are not limited to air conditioners, freezers, refrigerators, heat pumps, water chillers, flooded evaporator chillers, direct expansion chillers, walk-in coolers, heat pumps, mobile refrigerators, mobile air conditioning units and combinations thereof.

In one embodiment, the compositions comprising Z-1233zd are useful in mobile heat transfer systems, including refrigeration, air conditioning, or heat pump systems or apparatus. In another embodiment, the compositions are useful in stationary heat transfer systems, including refrigeration, air conditioning, or heat pump systems or apparatus.

As used herein, the term "mobile heat transfer system" shall be understood to mean any refrigeration, air conditioner, or heating apparatus incorporated into a transportation unit for the road, rail, sea or air. In addition, mobile refrigeration or air conditioner units, include those apparatus that are independent of any moving carrier and are known as "intermodal" systems. Such intermodal systems include "containers' (combined sea/land transport) as well as "swap bodies" (combined road/rail transport).

As used herein, the term "stationary heat transfer system" shall be understood to mean a system that is fixed in place during operation. A stationary heat transfer system may be located within or attached to a building, or may be a stand-alone device located out of doors, such as a soft drink vending machine. Such a stationary application may be a stationary air conditioning device or heat pump, including but not limited to a chiller, a high temperature heat pumps, which may be a trans-critical heat pump (one that operates with a condenser temperature above 50°C, 70°C, 80°C, 100°C, 120°C, 140°C, 160°C, 180°C, or 200°C), a residential, commercial or industrial air conditioning system, and may be window-mounted, ductless, ducted, packaged terminal, a chiller, and one that is exterior but connected to a building, such as a rooftop system. In stationary refrigeration applications, the disclosed compositions may be useful in high temperature, medium temperature and/or low temperature refrigeration equipment including commercial, industrial or residential refrigerators and freezers, ice machines, self-contained coolers and freezers, flooded evaporator chillers, direct expansion chillers, walk-in and reach-in coolers and freezers, and combination systems. In some embodiments, the disclosed compositions may be used in supermarket refrigerator systems.

Therefore in accordance with the present invention, the compositions as disclosed herein containing Z-1233zd may be useful in methods for producing cooling, producing heating, and transferring heat.

In one embodiment, a method is provided for producing cooling comprising evaporating any of the present compositions comprising Z-1233zd in the vicinity of a body to be cooled, and thereafter condensing said composition.

In another embodiment, a method is provided for producing heating comprising condensing any of the present compositions comprising Z-1233zd in the vicinity of a body to be heated, and thereafter evaporating said compositions.

In another embodiment, disclosed is a method of using the present compositions comprising Z-1233zd as a heat transfer fluid composition. The method comprises transporting said composition from a heat source to a heat sink.

Any one of the compositions disclosed herein may be useful as a replacement for a currently used ("incumbent") refrigerant, including but not limited to R-123 (or HFC-123, 2,2-dichloro-1,1,1-trifluoroethane), R-11 (or CFC-11, trichlorofluoromethane), R-12 (or CFC-12, dichlorodifluoromethane), R-22 (chlorodifluoromethane), R-245fa (or HFC-245fa, 1,1,1,3,3-pentafluoropropane), R-114 (or CFC-114, 1,2-dichloro-1,1,2,2-tetrafluoroethane), R-236fa (or HFC-236fa, 1,1,1,3,3,3-hexafluoropropane), R-236ea (or HFC-236ea, 1,1,1,2,3,3-hexafluoropropane), R-124 (or HCFC-124, 2-chloro-1,1,1,2-tetrafluoroethane), among others.

As used herein, the term "incumbent refrigerant" shall be understood to mean the refrigerant for which the heat transfer system was designed to operate, or the refrigerant that is resident in the heat transfer system.

In another embodiment is provided a method for operating a heat transfer system or for transferring heat that is designed to operate with an incumbent refrigerant by charging an empty system with a composition of the present invention, or by substantially replacing said incumbent refrigerant with a composition of the present invention.

As used herein, the term "substantially replacing" shall be understood to mean allowing the incumbent refrigerant to drain from the system, or pumping the incumbent refrigerant from the system, and then charging the system with a composition of the present invention. The system may be flushed with one or more quantities of the replacement refrigerant before being charged. It shall be understood that some small quantity of the incumbent refrigerant may be present in the system after the system has been charged with the composition of the present invention.

In another embodiment is provided a method for recharging a heat transfer system that contains an incumbent refrigerant and a lubricant, said method comprising substantially removing the incumbent refrigerant from the heat transfer system while retaining a substantial portion of the lubricant in said system and introducing one of the present compositions comprising Z-1233zd to the heat transfer system. In some embodiments, the lubricant in the system is partially replaced.

In another embodiment, the compositions of the present invention comprising Z-1233zd may be used to top-off a refrigerant charge in a chiller. For instance, if a chiller using HCFC-123 has diminished performance due to leakage of refrigerant, the compositions as disclosed herein may be added to bring performance back up to specification.

In another embodiment, a heat exchange system containing any of the present compositions comprising Z-1233zd is provided, wherein said system is selected from the group consisting of air conditioners, freezers, refrigerators, heat pumps, water chillers, flooded evaporator chillers, direct expansion chillers, walk-in coolers, heat pumps, mobile refrigerators, mobile air conditioning units, and systems having combinations thereof. Additionally, the compositions comprising Z-1233zd may be useful in secondary loop systems wherein these compositions serve as the primary refrigerant thus providing cooling to a secondary heat transfer fluid that thereby cools a remote location.

Each of a vapor-compression refrigeration system, an air conditioning system, and a heat pump system includes as components an evaporator, a compressor, a condenser, and an expansion device. A vapor-compression cycle re-uses refrigerant in multiple steps producing a cooling effect in one step and a heating effect in a different step. The cycle can be described simply as follows. Liquid refrigerant enters an evaporator through an expansion device, and the liquid refrigerant boils in the evaporator, by withdrawing heat from the environment, at a low temperature to form a vapor and produce cooling. The low-pressure vapor enters a compressor where the vapor is compressed to raise its pressure and temperature. The higher-pressure (compressed) vapor refrigerant then enters the condenser in which the refrigerant condenses and discharges its heat to the environment. The refrigerant returns to the expansion device through which the liquid expands from the higher-pressure level in the condenser to the low-pressure level in the evaporator, thus repeating the cycle.

In one embodiment, there is provided a heat transfer system containing any of the present compositions comprising Z-1233zd. In another embodiment is disclosed a refrigeration, air-conditioning or heat pump apparatus containing any of the present compositions comprising Z-1233zd. In another embodiment, is disclosed a stationary refrigeration or air-conditioning apparatus containing any of the present compositions comprising Z-1233zd. In yet another embodiment is disclosed a mobile refrigeration or air conditioning apparatus containing a composition as disclosed herein.

### Lubricants and Additives

In one embodiment, there is provided one of the present compositions comprising Z-1233zd and at least one additive. The most common additive is a lubricant. Lubricants and other additives are discussed in Fuels and Lubricants Handbook: Technology, Properties, Performance and Testing, Ch. 15, "Refrigeration Lubricants - Properties and Applications," Michels, H. Harvey and Seinel, Tobias H., MNL37WCD-EB, ASTM International, June 2003, which is incorporated by reference. Lubricants include polyolesters ("POEs"), naphthenic mineral oils ("NMOs") and polyalkylene glycols ("PAGs"), and synthetic lubricants. Other additives are selected from the group that are chemically active in the sense that they can react with metals in the system or with contaminants in the lubricant, including dispersants, oxidation inhibitors, extreme pressure agents, corrosion inhibitors, detergents, acid catchers. The selection of oxidation inhibitor can be dependent on the selection of lubricant. Alkyl phenols (e.g., dibutylhydroxytoluene) may be useful for polyolester lubricants. Nitrogen containing inhibitors (e.g., arylamines and phenols) may be useful for mineral oil lubricants. Acid catchers can be especially important in synthetic lubricant systems, and include alkanolamines, long chain amides and imines, carbonates and epoxides. Still other additives are selected from the group that change physical property characteristics selected from the group consisting of pour point modifiers, anti-foam agents, viscosity improvers, and emulsifiers. Anti-foam agents include the polydimethyl siloxanes, polyalkoxyamines and polyacrylates.

### Methods of Forming a Foam

The present invention further relates to a method of forming a foam comprising: (a) adding to a foamable composition a composition of the present invention; and (b) reacting the foamable composition under conditions effective to form a foam.

Closed-cell polyisocyanate-based foams are widely used for insulation purposes, for example, in building construction and in the manufacture of energy efficient electrical appliances. In the construction industry, polyurethane (polyisocyanurate) board stock is used in roofing and siding for its insulation and load-carrying capabilities. Poured and sprayed polyurethane foams are widely used for a variety of applications including insulating roofs, insulating large structures such as storage tanks, insulating appliances such as refrigerators and freezers, insulating refrigerated trucks and railcars, etc.

A second type of insulating foam is thermoplastic foam, primarily polystyrene foam. Polyolefin foams (e.g., polystyrene, polyethylene, and polypropylene) are widely used in insulation and packaging applications. These thermoplastic foams were generally made with CFC-12 (dichlorodifluoromethane) as the blowing agent. More recently HCFCs (HCFC-22, chlorodifluoromethane) or blends of HCFCs (HCFC-22/HCFC-142b) or HFCs (HFC-152a) have been employed as blowing agents for polystyrene.

A third important type of insulating foam is phenolic foam. These foams, which have very attractive flammability characteristics, were generally made with CFC-11 (trichlorofluoromethane) and CFC-113 (1,1,2-trichloro-1,2,2-trifluoroethane) blowing agents

In addition to closed-cell foams, open-cell foams are also of commercial interest, for example in the production of fluid-absorbent articles. U.S. Patent no. 6,703,431 (Dietzen, et. al.) describes open-cell foams based on thermoplastics polymers that are useful for fluid-absorbent hygiene articles such as wound contact materials. U.S. Patent no, 6,071,580 (Bland, et. al.) describes absorbent extruded thermoplastic foams which can be employed in various absorbency applications. Open-cell foams have also found application in evacuated or vacuum panel technologies, for example in the production of evacuated insulation panels as described in U.S. Patent no. 5,977,271 (Malone). Using open-cell foams in evacuated insulation panels, it has been possible to obtain R-values of 10 to 15 per inch of thickness depending upon the evacuation or vacuum level, polymer type, cell size, density, and open cell content of the foam. These open-cell foams have traditionally been produced employing CFCs, HCFCs, or more recently, HFCs as blowing agents.

Multimodal foams are also of commercial interest, and are described, for example, in U.S. Patent nos. 6,787,580 (Chonde, et. al.) and 5,332,761 (Paquet, et. al.). A multimodal foam is a foam having a multimodal cell size distribution, and such foams have particular utility in thermally insulating articles since they often have higher insulating values (R-values) than analogous foams having a generally uniform cell size distribution. These foams have been produced employing CFCs, HCFCs, and, more recently, HFCs as the blowing agent.

All of these various types of foams require blowing (expansion) agents for their manufacture. Insulating foams depend on the use of halocarbon blowing agents, not only to foam the polymer, but primarily for their low vapor thermal conductivity, a very important characteristic for insulation value.

Other embodiments provide foamable compositions, and preferably thermoset or thermoplastic foam compositions, prepared using the compositions of the present disclosure. In such foam embodiments, one or more of the present compositions are included as or part of a blowing agent in a foamable composition, which composition preferably includes one or more additional components capable of reacting and/or foaming under the proper conditions to form a foam or cellular structure. Another aspect relates to foam, and preferably closed cell foam, prepared from a polymer foam formulation containing a blowing agent comprising the compositions of the present disclosure.

Certain embodiments provide methods of preparing foams. In such foam embodiments, a blowing agent comprising a composition of the present disclosure is added to and reacted with a foamable composition, which foamable composition may include one or more additional components capable of reacting and/or foaming under the proper conditions to form a foam or cellular structure. Any of the methods well known in the art, such as those described in "Polyurethanes Chemistry and Technology," Volumes I and II, Saunders and Frisch, 1962, John Wiley and Sons, New York, N.Y., which is incorporated herein by reference, may be used or adapted for use in accordance with the foam embodiments.

In certain embodiments, it is often desirable to employ certain other ingredients in preparing foams. Among these additional ingredients are , catalysts, surfactants, flame retardants, preservatives, colorants, antioxidants, reinforcing agents, fillers, antistatic agents, solubilizing agents, IR attenuating agents, nucleating agents, cell controlling agents, extrusion aids, stabilizing agents, thermally insulating agents, plasticizers, viscosity modifiers, impact modifiers, gas barrier resins, polymer modifiers, rheology modifiers, antibacterial agents, vapor pressure modifiers, UV absorbers, cross-linking agents, permeability modifiers, bitterants, propellants and the like.

Polyurethane foams are generally prepared by combining and reacting an isocyanate with a polyol in the presence of a blowing or expanding agent and auxiliary chemicals added to control and modify both the polyurethane reaction itself and the properties of the final polymer. For processing convenience, these materials can be premixed into two non-reacting parts typically referred to as the "A-side" and the "B-side."

The term "A-side" is intended to mean isocyanate or isocyanate containing mixture. An isocyanate containing mixture may include the isocyanate, the blowing or expanding agent and auxiliary chemicals, like catalysts, surfactants, stabilizers, chain extenders, cross-linkers, water, fire retardants, smoke suppressants, pigments, coloring materials, fillers, etc.

The term "B-side" is intended to mean polyol or polyol containing mixture. A polyol containing mixture usually includes the polyol, the blowing or expanding agent and auxiliary chemicals, like catalysts, surfactants, stabilizers, chain extenders, cross-linkers, water, fire retardants, smoke suppressants, pigments, coloring materials, fillers, etc.

To prepare the foam, appropriate amounts of A-side and B-side are then combined to react.

When preparing a foam by a process disclosed herein, it is generally preferred to employ a minor amount of a surfactant to stabilize the foaming reaction mixture until it cures. Such surfactants may comprise a liquid or solid organosilicone compound. Other, less preferred surfactants include polyethylene glycol ethers of long chain alcohols, tertiary amine or alkanolamine salts of long chain alkyl acid sulfate esters, alkyl sulfonic esters and alkyl arylsulfonic acids. The surfactants are employed in amounts sufficient to stabilize the foaming reaction mixture against collapse and to prevent the formation of large, uneven cells. About 0.2 to about 5 parts or even more of the surfactant per 100 parts by weight of polyol are usually sufficient.

One or more catalysts for the reaction of the polyol with the polyisocyanate may also be used. Any suitable urethane catalyst may be used, including tertiary amine compounds and organometallic compounds. Such catalysts are used in an amount which measurably increases the rate of reaction of the polyisocyanate. Typical amounts are about 0.1 to about 5 parts of catalyst per 100 parts by weight of polyol.

Thus, in one aspect, the invention is directed to a closed cell foam prepared by foaming a foamable composition in the presence of a blowing agent described above.

Another aspect is for a foam premix composition comprising a polyol and a blowing agent described above.

Additionally, one aspect is for a method of forming a foam comprising:
(a) adding to a foamable composition a blowing agent described above; and
(b) reacting the foamable composition under conditions effective to form a foam.

In the context of polyurethane foams, the terms "foamable composition" and "foamable component" shall be understood herein to mean isocyanate or an isocyanate-containing mixture. In the context of polystyrene foams, the terms "foamable composition" and "foamable component" shall be understood herein to mean a polyolefin or a polyolefin-containing mixture.

A further aspect is for a method of forming a polyisocyanate-based foam comprising reacting at least one organic polyisocyanate with at least one active hydrogen-containing compound in the presence of a blowing agent described above. Another aspect is for a polyisocyanate foam produced by said method.

### Propellants

Another embodiment of the present invention relates to the use of an inventive composition as described herein for use as a propellant in sprayable composition. Additionally, the present invention relates to a sprayable composition comprising an inventive composition as described herein. The active ingredient to be sprayed together with inert ingredients, solvents and other materials may also be present in a sprayable composition. Preferably, the sprayable composition is an aerosol. Suitable active materials to be sprayed include, without limitations, cosmetic materials, such as deodorants, perfumes, hair sprays, cleaners, and polishing agents as well as medicinal materials such as anti-asthma and anti-halitosis medications.

The present invention further relates to a process for producing aerosol products comprising the step of adding an inventive composition as described herein to active ingredients in an aerosol container, wherein said composition functions as a propellant.

### Flame Suppression and Inerting

A further aspect provides methods of suppressing a flame, said methods comprising contacting a flame with a fluid comprising an inventive composition of the present disclosure. Any suitable methods for contacting the flame with the present composition may be used. For example, an inventive composition of the present disclosure may be sprayed, poured, and the like onto the flame, or at least a portion of the flame may be immersed in the flame suppression composition. In light of the teachings herein, those of skill in the art will be readily able to adapt a variety of conventional apparatus and methods of flame suppression for use in the present disclosure.

A further embodiment provides methods of extinguishing or suppressing a fire in a total-flood application comprising providing an agent comprising an inventive composition of the present disclosure; disposing the agent in a pressurized discharge system; and discharging the agent into an area to extinguish or suppress fires in that area.

Another embodiment provides methods of inerting a space to prevent a fire or explosion comprising providing an agent comprising an inventive composition of the present disclosure; disposing the agent in a pressurized discharge system; and discharging the agent into the space to prevent a fire or explosion from occurring.

The term "extinguishment" is usually used to denote complete elimination of a fire; whereas, "suppression" is often used to denote reduction, but not necessarily total elimination, of a fire or explosion. As used herein, terms "extinguishment" and "suppression" will be used interchangeably. There are four general types of halocarbon fire and explosion protection applications:
1) In total-flood fire extinguishment and/or suppression applications, the agent is discharged into a space to achieve a concentration sufficient to extinguish or suppress an existing fire. Total flooding use includes protection of enclosed, potentially occupied spaces such, as computer rooms as well as specialized, often unoccupied spaces such as aircraft engine nacelles and engine compartments in vehicles.
2) In streaming applications, the agent is applied directly onto a fire or into the region of a fire. This is usually accomplished using manually operated wheeled or portable units. A second method, included as a streaming application, uses a "localized" system, which discharges the agent toward a fire from one or more fixed nozzles. Localized systems may be activated either manually or automatically.
3) In explosion suppression, an inventive composition of the present disclosure is discharged to suppress an explosion that has already been initiated. The term "suppression" is normally used in this application because the explosion is usually self-limiting. However, the use of this term does not necessarily imply that the explosion is not extinguished by the agent. In this application, a detector is usually used to detect an expanding fireball from an explosion, and the agent is discharged rapidly to suppress the explosion. Explosion suppression is used primarily, but not solely, in defense applications.
4) In inertion, an inventive composition of the present disclosure is discharged into a space to prevent an explosion or a fire from being initiated. Often, a system similar or identical to that used for total-flood fire extinguishment or suppression is used. Usually, the presence of a dangerous condition (for example, dangerous concentrations of flammable or explosive gases) is detected, and the inventive composition of the present disclosure is then discharged to prevent the explosion or fire from occurring until the condition can be remedied.

The extinguishing method can be carried out by introducing the composition into an enclosed area surrounding a fire. Any of the known methods of introduction can be utilized provided that appropriate quantities of the composition are metered into the enclosed area at appropriate intervals. For example, a composition can be introduced by streaming, e.g., using conventional portable (or fixed) fire extinguishing equipment; by misting; or by flooding, e.g., by releasing (using appropriate piping, valves, and controls) the composition into an enclosed area surrounding a fire. The composition can optionally be combined with an inert propellant, e.g., nitrogen, argon, decomposition products of glycidyl azide polymers or carbon dioxide, to increase the rate of discharge of the composition from the streaming or flooding equipment utilized.

Preferably, the extinguishing process involves introducing an inventive composition of the present disclosure to a fire or flame in an amount sufficient to extinguish the fire or flame. One skilled in this field will recognize that the amount of flame suppressant needed to extinguish a particular fire will depend upon the nature and extent of the hazard. When the flame suppressant is to be introduced by flooding, cup burner test data are useful in determining the amount or concentration of flame suppressant required to extinguish a particular type and size of fire.

Laboratory tests useful for determining effective concentration ranges of an inventive composition when used in conjunction with extinguishing or suppressing a fire in a total-flood application or fire inertion are described, for example, in U.S. Patent no. 5,759,430.

### Gaseous Dielectrics

A dielectric gas, or insulating gas, is a dielectric material in gaseous state. Its main purpose is to prevent or rapidly quench electric discharges. Dielectric gases are used as electrical insulators in high
voltage applications, e.g., transformers, circuit
breakers, switchgear (namely high voltage switchgear), and radar waveguides. As used herein, the term "high voltage" shall be understood to mean above 1000 V for alternating current, and at least 1500 V for direct current. The inventive compositions can be useful as gaseous dielectrics in high voltage applications.

### Solvents

The inventive compositions may also be used as inert media for polymerization reactions, fluids for removing particulates from metal surfaces, as carrier fluids that may be used, for example, to place a fine film of lubricant on metal parts or as buffing abrasive agents to remove buffing abrasive compounds from polished surfaces such as metal. They are also used as displacement drying agents for removing water, such as from jewelry or metal parts, as resist developers in conventional circuit manufacturing techniques including chlorine-type developing agents, or as strippers for photoresists when used with, for example, a chlorohydrocarbon such as 1,1,1-trichloroethane or trichloroethylene. It is desirable to identify new agents for these applications with reduced global warming potential.

Binary azeotropic or azeotrope-like compositions of substantially constant-boiling mixtures can be characterized, depending upon the conditions chosen, in a number of ways. For example, it is well known by those skilled in the art, that, at different pressures the composition of a given azeotrope or azeotrope-like composition will vary at least to some degree, as will the boiling point temperature. Thus, an azeotropic or azeotrope-like composition of two compounds represents a unique type of relationship but with a variable composition that depends on temperature and/or pressure. Therefore, compositional ranges, rather than fixed compositions, are often used to define azeotropes and azeotrope-like compositions.

As used herein, the term "azeotropic composition" shall be understood to mean a composition where at a given temperature at equilibrium, the boiling point pressure (of the liquid phase) is identical to the dew point pressure (of the vapor phase), i.e., X₂ = Y₂. One way to characterize an azeotropic composition is that the vapor produced by partial evaporation or distillation of the liquid has the same composition as the liquid from which it was evaporated or distilled, that is, the admixture distills/refluxes without compositional change. Constant boiling compositions are characterized as azeotropic because they exhibit either a maximum or minimum boiling point, as compared with that of the non-azeotropic mixtures of the same components. Azeotropic compositions are also characterized by a minimum or a maximum in the vapor pressure of the mixture relative to the vapor pressure of the neat components at a constant temperature.

As used herein, the terms "azeotrope-like composition" and "near-azeotropic composition" shall be understood to mean a composition wherein the difference between the bubble point pressure ("BP") and dew point pressure ("DP") of the composition at a particular temperature is less than or equal to 5 percent based upon the bubble point pressure, i.e., [(BP-VP)/BP] x 100 ≤ 5. As used herein, the terms "3 percent azeotrope-like composition" and "3 percent near-azeotropic composition" shall be understood to mean a composition wherein the difference between the bubble point pressure ("BP") and dew point pressure ("DP") of the composition at a particular temperature is less than or equal to 3 percent based upon the bubble point pressure, i.e., [(BP-VP)/BP] x 100 ≤ 3.

For purposes of this invention, "effective amount" is defined as the amount of each component of the inventive compositions which, when combined, results in the formation of an azeotropic or azeotrope-like composition. This definition includes the amounts of each component, which amounts may vary depending on the pressure applied to the composition so long as the azeotropic or azeotrope-like compositions continue to exist at the different pressures, but with possible different boiling points. Therefore, effective amount includes the amounts, such as may be expressed in weight percentages, of each component of the compositions of the instant invention which form azeotropic or azeotrope-like compositions at temperatures or pressures other than as described herein.

As used herein, the term "mole fraction" shall be understood to mean the ratio of the number of moles of one component in the binary composition to the sum of the numbers of moles of each of the two components in said composition (e.g., X₂ = m₂/(m₁ + m₂).

To determine the relative volatility of any two compounds, a method known as the PTx method can be used. In this procedure, the total absolute pressure in a cell of known volume is measured at a constant temperature for various compositions of the two compounds. Use of the PTx Method is described in detail in "Phase Equilibrium in Process Design", Wiley-Interscience Publisher, 1970, written by Harold R. Null, on pages 124 to 126; hereby incorporated by reference. The resulting pressure v. liquid composition data are alternately referred to as Vapor Liquid Equilibria data (or "VLE data.")

These measurements can be converted into equilibrium vapor and liquid compositions in the PTx cell by using an activity coefficient equation model, such as the Non-Random, Two-Liquid (NRTL) equation, to represent liquid phase nonidealities. Use of an activity coefficient equation, such as the NRTL equation is described in detail in "The Properties of Gases and Liquids," 4th edition, published by McGraw Hill, written by Reid, Prausnitz and Poling, on pages 241 to 387, and in "Phase Equilibria in Chemical Engineering," published by Butterworth Publishers, 1985, written by Stanley M. Walas, pages 165 to 244. The collection of VLE data, the determination of interaction parameters by regression and the use of an equation of state to predict non-ideal behavior of a system are taught in "Double Azeotropy in Binary Mixtures of NH3 and CHF2CF2," C.-P. Chai Kao, M.E. Paulaitis, A. Yokozeki, Fluid Phase Equilibria, 127 (1997) 191-203. All of the aforementioned references are hereby incorporated by reference. Without wishing to be bound by any theory or explanation, it is believed that the NRTL equation, together with the PTx cell data, can sufficiently predict the relative volatilities of the Z-1233zd-containing compositions of the present invention and can therefore predict the behavior of these mixtures in multi-stage separation equipment such as distillation columns.

For economy of space in the tables that follow, "Z-1233zd" may be abbreviated to "Z1233zd."

### EXAMPLE 1: Z-1233zd/Methyl Formate

The binary system of Z-1233zd/methyl formate was explored for potential azeotropic and near-azeotropic behavior. To determine the relative volatility of this binary system, the PTx method described above was used. The pressure in a PTx cell of known volume was measured at constant temperature of 30°C for various binary compositions. The collected experimental data are displayed in Table 1.1 below.

**Table 1.1. Experimental VLE Data on the Z-1233zd/Methyl Formate System at 30°C.**

| X2 | Y2 | Pexp (psia) | Pcalc (psia) | Pcalc - Pexp (psia) |
|---|---|---|---|---|
| 0.000 | 0.000 | 13.832 | | |
| 0.025 | 0.018 | 13.665 | 13.724 | 0.0043 |
| 0.055 | 0.039 | 13.575 | 13.597 | 0.0016 |
| 0.087 | 0.063 | 13.469 | 13.464 | -0.0003 |
| 0.128 | 0.096 | 13.312 | 13.294 | -0.0014 |
| 0.181 | 0.139 | 13.103 | 13.080 | -0.0017 |
| 0.229 | 0.180 | 12.881 | 12.893 | 0.0009 |
| 0.285 | 0.229 | 12.681 | 12.684 | 0.0003 |
| 0.446 | 0.383 | 12.136 | 12.115 | -0.0017 |
| 0.522 | 0.460 | 11.861 | 11.870 | 0.0007 |
| 0.606 | 0.548 | 11.598 | 11.614 | 0.0013 |
| 0.689 | 0.638 | 11.363 | 11.373 | 0.0009 |
| 0.776 | 0.736 | 11.133 | 11.135 | 0.0002 |
| 0.861 | 0.835 | 10.928 | 10.913 | -0.0013 |
| 0.939 | 0.926 | 10.743 | 10.724 | -0.0018 |
| 1.000 | 1.000 | 10.580 | | |

| | | | | |
|---|---|---|---|---|
| X₂ = liquid mole fraction of Z-1233zd. Y₂ = vapor mole fraction of Z-1233zd. Pₑₓₚ = experimentally measured pressure. P_{calc} = pressure as calculated by NRTL model. | | | | |

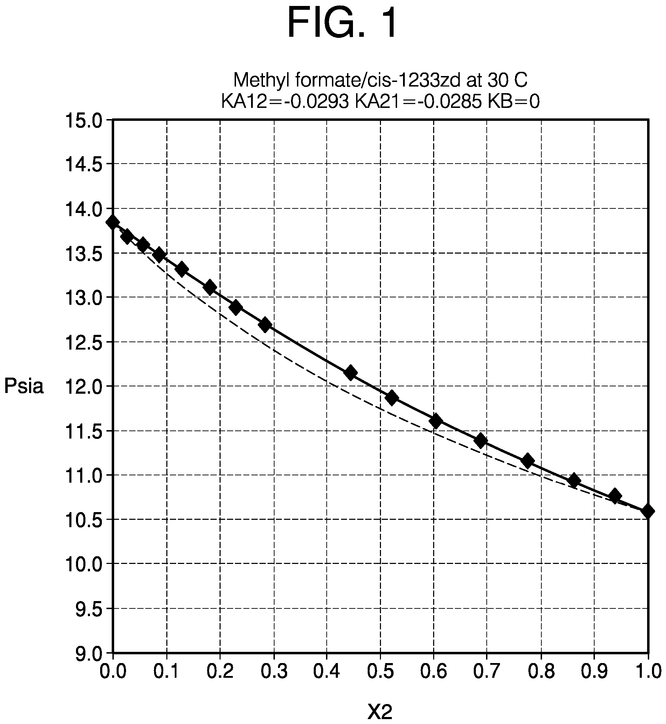

Figure 1 displays a plot of the pressure vs composition data over the compositional range of 0-1 liquid mole fraction of Z-1233zd. The top curve represents the bubble point ("BP") locus, and the bottom curve represents the dew point ("DP") locus.

Based on these VLE data, interaction coefficients were extracted. These coefficients were then used in the NRTL model to predict the behavior of the Z-1233zd/methyl formate system at various temperatures and pressures. The NRTL model was run over the temperature range of - 40 to 140 deg. C in increments of 20 deg. C (as well as at 29.9 deg. C) and increments of 0.002 liquid mole fraction of Z-1233zd. For purposes of brevity, the listing of the 5511 combinations (501 compositions x 11 temperatures) was edited to reflect increments of 0.100 Z-1233zd liquid molar composition, or the boundaries of near-azeotropic behavior. The resulting abridged listing of near-azeotropes of the Z-1233zd/methyl formate system is presented in Table 1.2

**Table 1.2. Predictions of Near-Azeotropes of the Z-1233zd/Methyl Formate System from -40 to 140 deg. C.**

| **Temp. (deg. C)** | **Liquid mol. frac. Z-1233zd** | **Vapor mol. frac. Z-1233zd** | **Liquid mol. frac. MF** | **Vapor mol. frac. MF** | **Bubble Point Pressure (psia)** | **Dew Point Pressure (psia)** | **[(BP-DP)/BP] x 100** |
|---|---|---|---|---|---|---|---|
| -40.0 | 0.000 | 0 | 1 | 1 | 0.359 | 0.359 | 0.00% |
| -40.0 | 0.002 | 0.001 | 0.998 | 0.999 | 0.359 | 0.359 | 0.03% |
| -40.0 | 0.100 | 0.073 | 0.9 | 0.927 | 0.348 | 0.344 | 1.09% |
| -40.0 | 0.200 | 0.154 | 0.8 | 0.846 | 0.338 | 0.332 | 1.59% |
| -40.0 | 0.300 | 0.242 | 0.7 | 0.758 | 0.328 | 0.322 | 1.72% |
| -40.0 | 0.400 | 0.339 | 0.6 | 0.661 | 0.319 | 0.313 | 1.61% |
| -40.0 | 0.500 | 0.441 | 0.5 | 0.559 | 0.310 | 0.306 | 1.38% |
| -40.0 | 0.600 | 0.547 | 0.4 | 0.453 | 0.303 | 0.300 | 1.09% |
| -40.0 | 0.700 | 0.657 | 0.3 | 0.343 | 0.296 | 0.294 | 0.81% |
| -40.0 | 0.800 | 0.769 | 0.2 | 0.231 | 0.290 | 0.289 | 0.54% |
| -40.0 | 0.900 | 0.883 | 0.1 | 0.117 | 0.285 | 0.284 | 0.29% |
| -40.0 | 0.998 | 0.998 | 0.002 | 0.002 | 0.279 | 0.279 | 0.01% |
| -40.0 | 1 | 1.000 | 0 | 0.000 | 0.279 | 0.279 | 0.00% |
| -20.0 | 0 | 0.000 | 1 | 1.000 | 1.299 | 1.299 | 0.00% |
| -20.0 | 0.002 | 0.001 | 0.998 | 0.999 | 1.298 | 1.298 | 0.03% |
| -20.0 | 0.1 | 0.073 | 0.9 | 0.927 | 1.260 | 1.247 | 1.04% |
| -20.0 | 0.2 | 0.154 | 0.8 | 0.846 | 1.222 | 1.203 | 1.54% |
| -20.0 | 0.3 | 0.243 | 0.7 | 0.757 | 1.187 | 1.167 | 1.68% |
| -20.0 | 0.4 | 0.339 | 0.6 | 0.661 | 1.154 | 1.136 | 1.60% |
| -20.0 | 0.5 | 0.440 | 0.5 | 0.560 | 1.124 | 1.109 | 1.40% |
| -20.0 | 0.6 | 0.546 | 0.4 | 0.454 | 1.097 | 1.085 | 1.14% |
| -20.0 | 0.7 | 0.656 | 0.3 | 0.344 | 1.073 | 1.064 | 0.86% |
| -20.0 | 0.8 | 0.768 | 0.2 | 0.232 | 1.050 | 1.044 | 0.58% |
| -20.0 | 0.9 | 0.882 | 0.1 | 0.118 | 1.029 | 1.026 | 0.31% |
| -20.0 | 0.998 | 0.998 | 0.002 | 0.002 | 1.009 | 1.009 | 0.01% |
| -20.0 | 1 | 1.000 | 0 | 0.000 | 1.009 | 1.009 | 0.00% |
| 0.0 | 0.000 | 0.000 | 1 | 1.000 | 3.773 | 3.773 | 0.00% |
| 0.0 | 0.002 | 0.001 | 0.998 | 0.999 | 3.770 | 3.769 | 0.03% |
| 0.0 | 0.100 | 0.074 | 0.9 | 0.926 | 3.659 | 3.623 | 1.01% |
| 0.0 | 0.200 | 0.155 | 0.8 | 0.845 | 3.552 | 3.498 | 1.51% |
| 0.0 | 0.300 | 0.244 | 0.7 | 0.756 | 3.450 | 3.392 | 1.67% |
| 0.0 | 0.400 | 0.339 | 0.6 | 0.661 | 3.355 | 3.301 | 1.62% |
| 0.0 | 0.500 | 0.440 | 0.5 | 0.560 | 3.268 | 3.221 | 1.43% |
| 0.0 | 0.600 | 0.545 | 0.4 | 0.455 | 3.188 | 3.150 | 1.18% |
| 0.0 | 0.700 | 0.655 | 0.3 | 0.345 | 3.115 | 3.087 | 0.90% |
| 0.0 | 0.800 | 0.767 | 0.2 | 0.233 | 3.048 | 3.029 | 0.62% |
| 0.0 | 0.900 | 0.882 | 0.1 | 0.118 | 2.984 | 2.974 | 0.33% |
| 0.0 | 0.998 | 0.998 | 0.002 | 0.002 | 2.924 | 2.923 | 0.01% |
| | 1 | 1.000 | 0 | 0.000 | 2.922 | 2.922 | 0.00% |
| 20.0 | 0 | 0.000 | 1 | 1.000 | 9.243 | 9.243 | 0.00% |
| 20.0 | 0.002 | 0.001 | 0.998 | 0.999 | 9.237 | 9.235 | 0.03% |
| 20.0 | 0.1 | 0.074 | 0.9 | 0.926 | 8.967 | 8.878 | 0.99% |
| 20.0 | 0.2 | 0.155 | 0.8 | 0.845 | 8.703 | 8.572 | 1.50% |
| 20.0 | 0.3 | 0.244 | 0.7 | 0.756 | 8.453 | 8.311 | 1.68% |
| 20.0 | 0.4 | 0.339 | 0.6 | 0.661 | 8.220 | 8.084 | 1.65% |
| 20.0 | 0.5 | 0.439 | 0.5 | 0.561 | 8.003 | 7.885 | 1.48% |
| 20.0 | 0.6 | 0.545 | 0.4 | 0.455 | 7.804 | 7.708 | 1.23% |
| 20.0 | 0.7 | 0.654 | 0.3 | 0.346 | 7.620 | 7.548 | 0.95% |
| 20.0 | 0.8 | 0.766 | 0.2 | 0.234 | 7.450 | 7.401 | 0.66% |
| 20.0 | 0.9 | 0.881 | 0.1 | 0.119 | 7.290 | 7.264 | 0.35% |
| 20.0 | 0.998 | 0.998 | 0.002 | 0.002 | 7.137 | 7.136 | 0.01% |
| 20.0 | 1 | 1.000 | 0 | 0.000 | 7.134 | 7.134 | 0.00% |
| 29.9 | 0 | 0.000 | 1 | 1.000 | 13.735 | 13.735 | 0.00% |
| 29.9 | 0.002 | 0.001 | 0.998 | 0.999 | 13.727 | 13.724 | 0.03% |
| 29.9 | 0.1 | 0.074 | 0.9 | 0.926 | 13.325 | 13.194 | 0.99% |
| 29.9 | 0.2 | 0.155 | 0.8 | 0.845 | 12.932 | 12.738 | 1.50% |
| 29.9 | 0.3 | 0.244 | 0.7 | 0.756 | 12.560 | 12.347 | 1.69% |
| 29.9 | 0.4 | 0.339 | 0.6 | 0.661 | 12.211 | 12.008 | 1.66% |
| 29.9 | 0.5 | 0.439 | 0.5 | 0.561 | 11.887 | 11.709 | 1.50% |
| 29.9 | 0.6 | 0.544 | 0.4 | 0.456 | 11.588 | 11.442 | 1.25% |
| 29.9 | 0.7 | 0.653 | 0.3 | 0.347 | 11.311 | 11.201 | 0.97% |
| 29.9 | 0.8 | 0.766 | 0.2 | 0.234 | 11.054 | 10.980 | 0.67% |
| 29.9 | 0.9 | 0.881 | 0.1 | 0.119 | 10.812 | 10.774 | 0.36% |
| 29.9 | 0.998 | 0.998 | 0.002 | 0.002 | 10.582 | 10.581 | 0.01% |
| 29.9 | 1 | 1.000 | 0 | 0.000 | 10.577 | 10.577 | |
| 40.0 | 0.000 | 0.000 | 1 | 1.000 | 19.817 | 19.817 | 0.00% |
| 40.0 | 0.002 | 0.001 | 0.998 | 0.999 | 19.805 | 19.800 | 0.03% |
| 40.0 | 0.100 | 0.074 | 0.9 | 0.926 | 19.223 | 19.034 | 0.98% |
| 40.0 | 0.200 | 0.156 | 0.8 | 0.844 | 18.654 | 18.374 | 1.50% |
| 40.0 | 0.300 | 0.244 | 0.7 | 0.756 | 18.115 | 17.807 | 1.70% |
| 40.0 | 0.400 | 0.339 | 0.6 | 0.661 | 17.608 | 17.313 | 1.68% |
| 40.0 | 0.500 | 0.439 | 0.5 | 0.561 | 17.137 | 16.877 | 1.52% |
| 40.0 | 0.600 | 0.544 | 0.4 | 0.456 | 16.701 | 16.488 | 1.28% |
| 40.0 | 0.700 | 0.653 | 0.3 | 0.347 | 16.297 | 16.135 | 0.99% |
| 40.0 | 0.800 | 0.765 | 0.2 | 0.235 | 15.921 | 15.812 | 0.69% |
| 40.0 | 0.900 | 0.881 | 0.1 | 0.119 | 15.567 | 15.510 | 0.36% |
| 40.0 | 0.998 | 0.998 | 0.002 | 0.002 | 15.231 | 15.230 | 0.01% |
| 40.0 | 1.000 | 1.000 | 0 | 0.000 | 15.224 | 15.224 | 0.00% |
| 60.0 | 0 | 0.000 | 1 | 1.000 | 38.211 | 38.211 | 0.00% |
| 60.0 | 0.002 | 0.001 | 0.998 | 0.999 | 38.188 | 38.178 | 0.02% |
| 60.0 | 0.1 | 0.075 | 0.9 | 0.925 | 37.056 | 36.695 | 0.97% |
| 60.0 | 0.2 | 0.156 | 0.8 | 0.844 | 35.949 | 35.409 | 1.50% |
| 60.0 | 0.3 | 0.244 | 0.7 | 0.756 | 34.897 | 34.300 | 1.71% |
| 60.0 | 0.4 | 0.339 | 0.6 | 0.661 | 33.907 | 33.331 | 1.70% |
| 60.0 | 0.5 | 0.439 | 0.5 | 0.561 | 32.983 | 32.473 | 1.55% |
| 60.0 | 0.6 | 0.544 | 0.4 | 0.456 | 32.125 | 31.705 | 1.31% |
| 60.0 | 0.7 | 0.653 | 0.3 | 0.347 | 31.328 | 31.009 | 1.02% |
| 60.0 | 0.8 | 0.765 | 0.2 | 0.235 | 30.586 | 30.370 | 0.71% |
| 60.0 | 0.9 | 0.881 | 0.1 | 0.119 | 29.886 | 29.775 | 0.37% |
| 60.0 | 0.998 | 0.998 | 0.002 | 0.002 | 29.226 | 29.223 | 0.01% |
| 60.0 | 1 | 1.000 | 0 | 0.000 | 29.212 | 29.212 | 0.00% |
| 80.0 | 0.000 | 0.000 | 1 | 1.000 | 67.665 | 67.665 | 0.00% |
| 80.0 | 0.002 | 0.001 | 0.998 | 0.999 | 67.623 | 67.607 | 0.02% |
| 80.0 | 0.100 | 0.075 | 0.9 | 0.925 | 65.596 | 64.967 | 0.96% |
| 80.0 | 0.200 | 0.157 | 0.8 | 0.843 | 63.612 | 62.667 | 1.48% |
| 80.0 | 0.300 | 0.246 | 0.7 | 0.754 | 61.727 | 60.678 | 1.70% |
| 80.0 | 0.400 | 0.340 | 0.6 | 0.660 | 59.951 | 58.933 | 1.70% |
| 80.0 | 0.500 | 0.440 | 0.5 | 0.560 | 58.290 | 57.387 | 1.55% |
| 80.0 | 0.600 | 0.545 | 0.4 | 0.455 | 56.745 | 56.000 | 1.31% |
| 80.0 | 0.700 | 0.654 | 0.3 | 0.346 | 55.309 | 54.743 | 1.02% |
| 80.0 | 0.800 | 0.766 | 0.2 | 0.234 | 53.972 | 53.590 | 0.71% |
| 80.0 | 0.900 | 0.881 | 0.1 | 0.119 | 52.714 | 52.518 | 0.37% |
| 80.0 | 0.998 | 0.998 | 0.002 | 0.002 | 51.530 | 51.526 | 0.01% |
| | 1 | 1.000 | 0 | 0.000 | 51.507 | 51.507 | |
| 100.0 | 0 | 0.000 | 1 | 1.000 | 111.844 | 111.844 | 0.00% |
| 100.0 | 0.002 | 0.001 | 0.998 | 0.999 | 111.773 | 111.747 | 0.02% |
| 100.0 | 0.1 | 0.076 | 0.9 | 0.924 | 108.378 | 107.371 | 0.93% |
| 100.0 | 0.2 | 0.159 | 0.8 | 0.841 | 105.060 | 103.544 | 1.44% |
| 100.0 | 0.3 | 0.248 | 0.7 | 0.752 | 101.909 | 100.222 | 1.66% |
| 100.0 | 0.4 | 0.342 | 0.6 | 0.658 | 98.943 | 97.304 | 1.66% |
| 100.0 | 0.5 | 0.442 | 0.5 | 0.558 | 96.169 | 94.714 | 1.51% |
| 100.0 | 0.6 | 0.547 | 0.4 | 0.453 | 93.589 | 92.391 | 1.28% |
| 100.0 | 0.7 | 0.656 | 0.3 | 0.344 | 91.194 | 90.286 | 1.00% |
| 100.0 | 0.8 | 0.767 | 0.2 | 0.233 | 88.967 | 88.357 | 0.69% |
| 100.0 | 0.9 | 0.882 | 0.1 | 0.118 | 86.878 | 86.569 | 0.36% |
| 100.0 | 0.998 | 0.998 | 0.002 | 0.002 | 84.925 | 84.918 | 0.01% |
| 100.0 | 1 | 1.000 | 0 | 0.000 | 84.885 | 84.885 | 0.00% |
| 120.0 | 0 | 0.000 | 1 | 1.000 | 174.772 | 174.772 | 0.00% |
| 120.0 | 0.002 | 0.001 | 0.998 | 0.999 | 174.660 | 174.621 | 0.02% |
| 120.0 | 0.1 | 0.077 | 0.9 | 0.923 | 169.285 | 167.795 | 0.88% |
| 120.0 | 0.2 | 0.161 | 0.8 | 0.839 | 164.045 | 161.802 | 1.37% |
| 120.0 | 0.3 | 0.251 | 0.7 | 0.749 | 159.081 | 156.588 | 1.57% |
| 120.0 | 0.4 | 0.346 | 0.6 | 0.654 | 154.419 | 152.002 | 1.56% |
| 120.0 | 0.5 | 0.446 | 0.5 | 0.554 | 150.069 | 147.930 | 1.43% |
| 120.0 | 0.6 | 0.551 | 0.4 | 0.449 | 146.033 | 144.280 | 1.20% |
| 120.0 | 0.7 | 0.659 | 0.3 | 0.341 | 142.298 | 140.978 | 0.93% |
| 120.0 | 0.8 | 0.770 | 0.2 | 0.230 | 138.837 | 137.959 | 0.63% |
| 120.0 | 0.9 | 0.884 | 0.1 | 0.116 | 135.609 | 135.168 | 0.33% |
| 120.0 | 0.998 | 0.998 | 0.002 | 0.002 | 132.610 | 132.601 | 0.01% |
| | 1 | 1.000 | 0 | 0.000 | 132.550 | 132.550 | |
| 140.0 | 0.000 | 0.000 | 1 | 1.000 | 260.836 | 260.836 | 0.00% |
| 140.0 | 0.002 | 0.002 | 0.998 | 0.998 | 260.667 | 260.613 | 0.02% |
| 140.0 | 0.100 | 0.079 | 0.9 | 0.921 | 252.540 | 250.500 | 0.81% |
| 140.0 | 0.200 | 0.164 | 0.8 | 0.836 | 244.651 | 241.590 | 1.25% |
| 140.0 | 0.300 | 0.255 | 0.7 | 0.745 | 237.212 | 233.824 | 1.43% |
| 140.0 | 0.400 | 0.351 | 0.6 | 0.649 | 230.256 | 226.992 | 1.42% |
| 140.0 | 0.500 | 0.451 | 0.5 | 0.549 | 223.796 | 220.932 | 1.28% |
| 140.0 | 0.600 | 0.556 | 0.4 | 0.444 | 217.835 | 215.514 | 1.07% |
| 140.0 | 0.700 | 0.664 | 0.3 | 0.336 | 212.353 | 210.628 | 0.81% |
| 140.0 | 0.800 | 0.774 | 0.2 | 0.226 | 207.311 | 206.182 | 0.54% |
| 140.0 | 0.900 | 0.886 | 0.1 | 0.114 | 202.647 | 202.091 | 0.27% |
| 140.0 | 0.998 | 0.998 | 0.002 | 0.002 | 198.361 | 198.349 | 0.01% |
| | 1 | 1.000 | 0 | 0.000 | 198.275 | 198.275 | 0.00% |

The NRTL model was run at a pressure of 1 atm in increments of 0.002 liquid mole fraction of Z-1233zd. For purposes of brevity, the listing was edited to reflect increments of 0.100 Z-1233zd liquid molar composition, or the boundaries of near-azeotropic behavior. The resulting abridged listing of near-azeotropes of the Z-1233zd/methyl formate system is presented in Table 1.3.

**Table 1.3. Predicted Near-Azeotropes of the Z-1233zd/MF System at 1 Atm.**

| **Pressure (atm)** | **Temp. (deg. C)** | **Liquid mol. frac. Z-1233zd** | **Vapor mol. frac. Z-1233zd** | **Liquid mol. frac. MF** | **Vapor mol. frac. MF** | **Point Pressure (psia)** | **Dew Point Pressure (psia)** | **[(BP-DP)/ BP] x 100** |
|---|---|---|---|---|---|---|---|---|
| 1.00 | 31.787 | 0.000 | 0.000 | 1.000 | 1.000 | 14.696 | 14.696 | 0.00% |
| 1.00 | 31.804 | 0.002 | 0.001 | 0.998 | 0.999 | 14.696 | 14.692 | 0.03% |
| 1.00 | 32.599 | 0.100 | 0.074 | 0.900 | 0.926 | 14.696 | 14.551 | 0.98% |
| 1.00 | 33.404 | 0.200 | 0.155 | 0.800 | 0.845 | 14.696 | 14.475 | 1.50% |
| 1.00 | 34.195 | 0.300 | 0.244 | 0.700 | 0.756 | 14.696 | 14.447 | 1.69% |
| 1.00 | 34.965 | 0.400 | 0.339 | 0.600 | 0.661 | 14.696 | 14.450 | 1.67% |
| 1.00 | 35.705 | 0.500 | 0.439 | 0.500 | 0.561 | 14.696 | 14.474 | 1.51% |
| 1.00 | 36.414 | 0.600 | 0.544 | 0.400 | 0.456 | 14.696 | 14.510 | 1.27% |
| 1.00 | 37.090 | 0.700 | 0.653 | 0.300 | 0.347 | 14.696 | 14.551 | 0.99% |
| 1.00 | 37.739 | 0.800 | 0.765 | 0.200 | 0.235 | 14.696 | 14.596 | 0.68% |
| 1.00 | 38.369 | 0.900 | 0.881 | 0.100 | 0.119 | 14.696 | 14.643 | 0.36% |
| 1.00 | 38.984 | 0.998 | 0.998 | 0.002 | 0.002 | 14.696 | 14.695 | 0.01% |
| 1.00 | 38.996 | 1.000 | 1.000 | 0.000 | 0.000 | 14.696 | 14.696 | 0.00% |

The detailed data in Tables 1.2 and 1.3 are broadly summarized in Tables 1.4 and 1.5 below. The broad ranges of azeotrope-like compositions (based on [(BP-VP)/BP] x 100 ≤ 5) are listed in Table 1.4.

**Table 1.4. Summaries of Near-Azeotropes of the Z-1233zd/MF System.**

| **Components** | **T (°C)** | **Z-1233zd /Methyl formate Liquid Mole Percentage Range** |
|---|---|---|
| Z-1233zd / methyl formate | -40 | 1-99 / 99-1 |
| Z-1233zd / methyl formate | -20 | 1-99 / 99-1 |
| Z-1233zd / methyl formate | 0 | 1-99 / 99-1 |
| Z-1233zd / methyl formate | 20 | 1-99 / 99-1 |
| Z-1233zd / methyl formate | 29.9 | 1-99 / 99-1 |
| Z-1233zd / methyl formate | 40 | 1-99 / 99-1 |
| Z-1233zd / methyl formate | 60 | 1-99 / 99-1 |
| Z-1233zd / methyl formate | 80 | 1-99 / 99-1 |
| Z-1233zd / methyl formate | 100 | 1-99 / 99-1 |
| Z-1233zd / methyl formate | 120 | 1-99 / 99-1 |
| Z-1233zd / methyl formate | 140 | 1-99 / 99-1 |

The broad ranges of 3% azeotrope-like compositions (based on [(BP-VP)/BP] x 100 ≤ 3) are listed in Table 1.5.

**Table 1.5. Summaries of 3% Near-Azeotropes of the Z-1233zd/MF System.**

| **Components** | **T (°C)** | **Z-1233zd/Methyl formate Liquid Mole Percentage Range** |
|---|---|---|
| Z-1233zd / methyl formate | -40 | 1-99 / 99-1 |
| Z-1233zd / methyl formate | -20 | 1-99 / 99-1 |
| Z-1233zd / methyl formate | 0 | 1-99 / 99-1 |
| Z-1233zd / methyl formate | 20 | 1-99 / 99-1 |
| Z-1233zd / methyl formate | 29.9 | 1-99 / 99-1 |
| Z-1233zd / methyl formate | 40 | 1-99 / 99-1 |
| Z-1233zd / methyl formate | 60 | 1-99 / 99-1 |
| Z-1233zd / methyl formate | 80 | 1-99 / 99-1 |
| Z-1233zd / methyl formate | 100 | 1-99 / 99-1 |
| Z-1233zd / methyl formate | 120 | 1-99 / 99-1 |
| Z-1233zd / methyl formate | 140 | 1-99 / 99-1 |

At atmospheric pressure, all compositions were found to be 3% near azeotropes.

### EXAMPLE 2: Z-1233zd/Dimethoxymethane

The binary system of Z-1233zd/dimethoxymethane was explored for potential azeotropic and near-azeotropic behavior. To determine the relative volatility of this binary system, the PTx method described above was used. The pressure in a PTx cell of known volume was measured at constant temperature of 29.9 °C for various binary compositions. The collected experimental data are displayed in Table 2.1 below.

**Table 2-1. VLE Data for the Z-1233zd/Dimethoxymethane System.**

| X2 | Y2 | Pexp psia | Pcalc psia | Pcalc-Pexp psia |
|---|---|---|---|---|
| 0.000 | 0.000 | 9.329 | | |
| 0.038 | 0.030 | 9.197 | 9.241 | 0.005 |
| 0.085 | 0.069 | 9.191 | 9.140 | -0.006 |
| 0.131 | 0.110 | 9.192 | 9.050 | -0.015 |
| 0.188 | 0.165 | 8.964 | 8.956 | -0.001 |
| 0.259 | 0.240 | 8.827 | 8.865 | 0.004 |
| 0.318 | 0.307 | 8.790 | 8.818 | 0.003 |
| 0.384 | 0.385 | 8.760 | 8.799 | 0.005 |
| 0.522 | 0.552 | 8.877 | 8.892 | 0.002 |
| 0.576 | 0.617 | 8.970 | 8.980 | 0.001 |
| 0.642 | 0.694 | 9.118 | 9.128 | 0.001 |
| 0.715 | 0.772 | 9.354 | 9.340 | -0.002 |
| 0.793 | 0.848 | 9.657 | 9.621 | -0.004 |
| 0.869 | 0.913 | 9.991 | 9.940 | -0.005 |
| 0.939 | 0.963 | 10.307 | 10.259 | -0.005 |
| 1.000 | 1.000 | 10.556 | | |

| | | | | |
|---|---|---|---|---|
| X₂ = liquid mole fraction of Z-1233zd. Y₂ = vapor mole fraction of Z-1233zd. Pₑₓₚ = experimentally measured pressure. P_{calc} = pressure as calculated by NRTL model. | | | | |

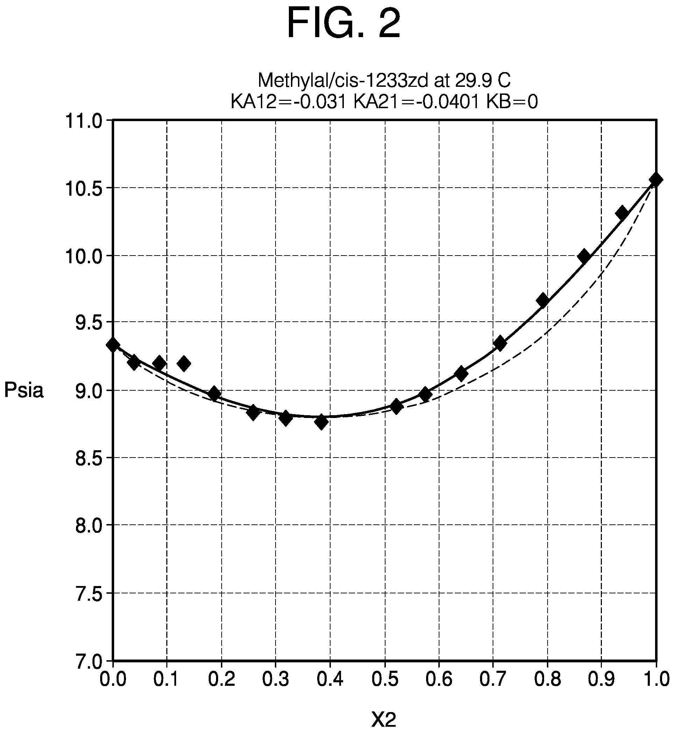

The above vapor pressure v. Z-1233zd liquid mole fraction data are plotted in Figure 2. The experimental data points are shown in Figure 2 as solid points. The solid line represents bubble point predictions using the NRTL equation. The dashed line represents predicted dew points.

Based on these VLE data, interaction coefficients were extracted. The NRTL model was run over the temperature range of -40 to 140 deg. C in increments of 10 deg. C allowing pressure to vary such that the azeotropic condition (X₂ = Y₂) was met. The resulting predictions of azeotropes in the Z-1233zd/DMM system are displayed in Table 2.2.

**Table 2.2. Predicted Azeotropes of the Z-1233zd/DMM System from -40 to 140 deg. C.**

| Temp. (deg. C) | Pressure (psia) | Z1233zd Vapor mol. frac. | DMM Vapor mol. frac. | Z1233zd Liquid mol. frac. | DMM Liquid mol. frac. | Z1233zd Liquid wt. frac. | DMM Liquid wt. frac. |
|---|---|---|---|---|---|---|---|
| -40 | 0.18 | 0.394 | 0.606 | 0.394 | 0.606 | 0.527 | 0.473 |
| -30 | 0.38 | 0.389 | 0.611 | 0.389 | 0.611 | 0.522 | 0.478 |
| -20 | 0.73 | 0.385 | 0.615 | 0.385 | 0.615 | 0.518 | 0.482 |
| -10 | 1.33 | 0.382 | 0.618 | 0.382 | 0.618 | 0.515 | 0.485 |
| 0 | 2.28 | 0.381 | 0.619 | 0.381 | 0.619 | 0.513 | 0.487 |
| 10 | 3.72 | 0.380 | 0.620 | 0.380 | 0.620 | 0.513 | 0.487 |
| 20 | 5.84 | 0.382 | 0.618 | 0.382 | 0.618 | 0.514 | 0.486 |
| 29.9 | 8.78 | 0.385 | 0.615 | 0.385 | 0.615 | 0.517 | 0.483 |
| 30 | 8.82 | 0.385 | 0.615 | 0.385 | 0.615 | 0.517 | 0.483 |
| 40 | 12.90 | 0.389 | 0.611 | 0.389 | 0.611 | 0.522 | 0.478 |
| 50 | 18.33 | 0.395 | 0.605 | 0.395 | 0.605 | 0.529 | 0.471 |
| 60 | 25.37 | 0.403 | 0.597 | 0.403 | 0.597 | 0.536 | 0.464 |
| 70 | 34.31 | 0.411 | 0.589 | 0.411 | 0.589 | 0.545 | 0.455 |
| 80 | 45.44 | 0.421 | 0.579 | 0.421 | 0.579 | 0.555 | 0.445 |
| 90 | 59.05 | 0.431 | 0.569 | 0.431 | 0.569 | 0.565 | 0.435 |
| 100 | 75.45 | 0.440 | 0.560 | 0.440 | 0.560 | 0.574 | 0.426 |
| 110 | 94.94 | 0.450 | 0.550 | 0.450 | 0.550 | 0.583 | 0.417 |
| 120 | 117.82 | 0.458 | 0.542 | 0.458 | 0.542 | 0.592 | 0.408 |
| 130 | 144.38 | 0.465 | 0.535 | 0.465 | 0.535 | 0.599 | 0.401 |
| 140 | 174.86 | 0.471 | 0.529 | 0.471 | 0.529 | 0.605 | 0.395 |

The model was used to predict azeotropes over a pressure range of 1-31 atm at 1 atm increments, the results of which are displayed in Table 2.3.

**Table 2.3. Predicted Azeotropes of the A-1233zd/DMM System from 1 to 31 Atm.**

| Pressure (atm) | Temp. (deg. C) | Z1233zd Vapor mol. frac. | DMM Vapor mol. frac. | Z1233zd Liquid mol. frac. | DMM Liquid mol. frac. | Z1233zd Liquid wt. frac. | DMM Liquid wt. frac. |
|---|---|---|---|---|---|---|---|
| 1 | 43.6 | 0.391 | 0.609 | 0.391 | 0.609 | 0.524 | 0.476 |
| 2 | 64.8 | 0.407 | 0.593 | 0.407 | 0.593 | 0.540 | 0.460 |
| 3 | 78.9 | 0.420 | 0.580 | 0.420 | 0.580 | 0.554 | 0.446 |
| 4 | 89.8 | 0.431 | 0.569 | 0.431 | 0.569 | 0.565 | 0.435 |
| 5 | 98.9 | 0.439 | 0.561 | 0.439 | 0.561 | 0.573 | 0.427 |
| 6 | 106.7 | 0.447 | 0.553 | 0.447 | 0.553 | 0.581 | 0.419 |
| 7 | 113.6 | 0.453 | 0.547 | 0.453 | 0.547 | 0.587 | 0.413 |
| 8 | 119.9 | 0.458 | 0.542 | 0.458 | 0.542 | 0.591 | 0.409 |
| 9 | 125.6 | 0.462 | 0.538 | 0.462 | 0.538 | 0.596 | 0.404 |
| 10 | 130.9 | 0.466 | 0.534 | 0.466 | 0.534 | 0.599 | 0.401 |
| 11 | 135.8 | 0.469 | 0.531 | 0.469 | 0.531 | 0.602 | 0.398 |
| 12 | 140.5 | 0.472 | 0.528 | 0.472 | 0.528 | 0.605 | 0.395 |
| 13 | 144.8 | 0.474 | 0.526 | 0.474 | 0.526 | 0.607 | 0.393 |
| 14 | 149.0 | 0.476 | 0.524 | 0.476 | 0.524 | 0.609 | 0.391 |
| 15 | 152.9 | 0.478 | 0.522 | 0.478 | 0.522 | 0.611 | 0.389 |
| 16 | 156.7 | 0.480 | 0.520 | 0.480 | 0.520 | 0.613 | 0.387 |
| 17 | 160.4 | 0.481 | 0.519 | 0.481 | 0.519 | 0.614 | 0.386 |
| 18 | 163.9 | 0.483 | 0.517 | 0.483 | 0.517 | 0.616 | 0.384 |
| 19 | 167.3 | 0.484 | 0.516 | 0.484 | 0.516 | 0.617 | 0.383 |
| 20 | 170.6 | 0.486 | 0.514 | 0.486 | 0.514 | 0.618 | 0.382 |
| 21 | 173.8 | 0.487 | 0.513 | 0.487 | 0.513 | 0.620 | 0.380 |
| 22 | 176.9 | 0.489 | 0.511 | 0.489 | 0.511 | 0.621 | 0.379 |
| 23 | 180.0 | 0.491 | 0.509 | 0.491 | 0.509 | 0.623 | 0.377 |
| 24 | 183.0 | 0.493 | 0.507 | 0.493 | 0.507 | 0.625 | 0.375 |
| 25 | 186.0 | 0.495 | 0.505 | 0.495 | 0.505 | 0.627 | 0.373 |
| 26 | 189.0 | 0.497 | 0.503 | 0.497 | 0.503 | 0.629 | 0.371 |
| 27 | 192.0 | 0.501 | 0.499 | 0.501 | 0.499 | 0.632 | 0.368 |
| 28 | 195.1 | 0.505 | 0.495 | 0.505 | 0.495 | 0.636 | 0.364 |
| 29 | 198.5 | 0.513 | 0.487 | 0.513 | 0.487 | 0.644 | 0.356 |
| 30 | 202.0 | 0.522 | 0.478 | 0.522 | 0.478 | 0.652 | 0.348 |
| 31 | 205.8 | 0.528 | 0.472 | 0.528 | 0.472 | 0.657 | 0.343 |

The model was run over a temperature range from -40 to 140 deg. C in 20 deg. increments, and also at 29.9 deg. for the purpose of comparison to experimentally measured results. At each temperature, the model was run over the full range from 0 to 1 of Z-1233zd liquid molar composition in increments of 0.002. Thus the model was run at a total of 5511 combinations of temperature and Z-1233zd liquid molar composition (11 temperatures x 501 compositions = 5511). Among those 5511 combinations, some qualify as azeotropic or near-azeotropic, and it is these combinations that Applicant claims. For purposes of brevity, the listing of the 5511 combinations was edited to reflect increments of 0.10 Z-1233zd liquid molar composition, or the boundaries of near-azeotropic behavior. The resulting abridged listing is presented in Table 2.4.

**Table 2.4. Predicted Near-Azeotropes of the Z-1233zd/DMM System.**

| **Temp. (deg. C)** | **Liquid mol. frac. Z-1233zd** | **Vapor mol. frac. Z-1233zd** | **Liquid mol. frac DMM** | **Vapor mol. frac DMM** | **Bubble Point Pressure (psia)** | **Dew Point Pressure (psia)** | **[(BP-DP)/ BP] x 100** |
|---|---|---|---|---|---|---|---|
| -40.00 | 0.000 | 0.000 | 1.000 | 1.000 | 0.211 | 0.211 | 0.00% |
| -40.00 | 0.002 | 0.001 | 0.998 | 0.999 | 0.211 | 0.211 | 0.08% |
| -40.00 | 0.100 | 0.063 | 0.900 | 0.937 | 0.202 | 0.198 | 2.02% |
| -40.00 | 0.200 | 0.151 | 0.800 | 0.849 | 0.193 | 0.190 | 1.66% |
| -40.00 | 0.300 | 0.264 | 0.700 | 0.736 | 0.187 | 0.186 | 0.56% |
| -40.00 | 0.400 | 0.403 | 0.600 | 0.597 | 0.185 | 0.185 | 0.00% |
| -40.00 | 0.500 | 0.555 | 0.500 | 0.445 | 0.188 | 0.186 | 1.01% |
| -40.00 | 0.600 | 0.702 | 0.400 | 0.298 | 0.198 | 0.190 | 3.88% |
| -40.00 | 0.628 | 0.740 | 0.372 | 0.260 | 0.202 | 0.192 | 4.94% |
| -40.00 | 0.630 | 0.742 | 0.370 | 0.258 | 0.202 | 0.192 | 5.02% |
| -40.00 | 0.966 | 0.990 | 0.034 | 0.010 | 0.272 | 0.259 | 5.05% |
| -40.00 | 0.968 | 0.990 | 0.032 | 0.010 | 0.273 | 0.260 | 4.81% |
| -40.00 | 0.998 | 0.999 | 0.002 | 0.001 | 0.279 | 0.278 | 0.34% |
| -40.00 | 1.000 | 1.000 | 0.000 | 0.000 | 0.279 | 0.279 | 0.00% |
| -20.00 | 0.000 | 0.000 | 1.000 | 1.000 | 0.813 | 0.813 | 0.00% |
| -20.00 | 0.002 | 0.001 | 0.998 | 0.999 | 0.813 | 0.812 | 0.05% |
| -20.00 | 0.100 | 0.070 | 0.900 | 0.930 | 0.783 | 0.773 | 1.28% |
| -20.00 | 0.200 | 0.161 | 0.800 | 0.839 | 0.757 | 0.749 | 1.01% |
| -20.00 | 0.300 | 0.274 | 0.700 | 0.726 | 0.739 | 0.737 | 0.30% |
| -20.00 | 0.400 | 0.406 | 0.600 | 0.594 | 0.734 | 0.734 | 0.01% |
| -20.00 | 0.500 | 0.547 | 0.500 | 0.453 | 0.745 | 0.739 | 0.75% |
| -20.00 | 0.600 | 0.683 | 0.400 | 0.317 | 0.774 | 0.754 | 2.63% |
| -20.00 | 0.696 | 0.797 | 0.304 | 0.203 | 0.819 | 0.778 | 5.00% |
| -20.00 | 0.698 | 0.799 | 0.302 | 0.201 | 0.820 | 0.779 | 5.04% |
| -20.00 | 0.700 | 0.801 | 0.300 | 0.199 | 0.821 | 0.779 | 5.09% |
| -20.00 | 0.928 | 0.969 | 0.072 | 0.031 | 0.964 | 0.915 | 5.05% |
| -20.00 | 0.930 | 0.970 | 0.070 | 0.030 | 0.965 | 0.917 | 4.96% |
| -20.00 | 0.998 | 0.999 | 0.002 | 0.001 | 1.007 | 1.005 | 0.18% |
| -20.00 | 1.000 | 1.000 | 0.000 | 0.000 | 1.009 | 1.009 | 0.00% |
| 0.00 | 0.000 | 0.000 | 1.000 | 1.000 | 2.470 | 2.470 | 0.00% |
| 0.00 | 0.002 | 0.001 | 0.998 | 0.999 | 2.469 | 2.468 | 0.03% |
| 0.00 | 0.100 | 0.075 | 0.900 | 0.925 | 2.392 | 2.372 | 0.84% |
| 0.00 | 0.200 | 0.169 | 0.800 | 0.831 | 2.328 | 2.313 | 0.65% |
| 0.00 | 0.300 | 0.280 | 0.700 | 0.720 | 2.287 | 2.282 | 0.18% |
| 0.00 | 0.400 | 0.406 | 0.600 | 0.594 | 2.276 | 2.276 | 0.01% |
| 0.00 | 0.500 | 0.538 | 0.500 | 0.462 | 2.303 | 2.291 | 0.52% |
| 0.00 | 0.600 | 0.667 | 0.400 | 0.333 | 2.371 | 2.330 | 1.74% |
| 0.00 | 0.700 | 0.781 | 0.300 | 0.219 | 2.479 | 2.397 | 3.31% |
| 0.00 | 0.800 | 0.875 | 0.200 | 0.125 | 2.617 | 2.502 | 4.38% |
| 0.00 | 0.900 | 0.946 | 0.100 | 0.054 | 2.769 | 2.665 | 3.77% |
| 0.00 | 0.998 | 0.999 | 0.002 | 0.001 | 2.919 | 2.916 | 0.11% |
| | 1.000 | 1.000 | 0.000 | 0.000 | 2.922 | 2.922 | 0.00% |
| 20.00 | 0.000 | 0.000 | 1.000 | 1.000 | 6.249 | 6.249 | 0.00% |
| 20.00 | 0.002 | 0.001 | 0.998 | 0.999 | 6.246 | 6.244 | 0.02% |
| 20.00 | 0.100 | 0.079 | 0.900 | 0.921 | 6.079 | 6.044 | 0.58% |
| 20.00 | 0.200 | 0.174 | 0.800 | 0.826 | 5.944 | 5.918 | 0.45% |
| 20.00 | 0.300 | 0.284 | 0.700 | 0.716 | 5.859 | 5.851 | 0.12% |
| 20.00 | 0.400 | 0.404 | 0.600 | 0.596 | 5.837 | 5.836 | 0.01% |
| 20.00 | 0.500 | 0.530 | 0.500 | 0.470 | 5.889 | 5.869 | 0.34% |
| 20.00 | 0.600 | 0.654 | 0.400 | 0.346 | 6.022 | 5.953 | 1.14% |
| 20.00 | 0.700 | 0.766 | 0.300 | 0.234 | 6.231 | 6.096 | 2.16% |
| 20.00 | 0.800 | 0.861 | 0.200 | 0.139 | 6.502 | 6.316 | 2.86% |
| 20.00 | 0.900 | 0.939 | 0.100 | 0.061 | 6.811 | 6.645 | 2.45% |
| 20.00 | 0.998 | 0.999 | 0.002 | 0.001 | 7.127 | 7.122 | 0.07% |
| 20.00 | 1.000 | 1.000 | 0.000 | 0.000 | 7.134 | 7.134 | 0.00% |
| 29.93 | 0.000 | 0.000 | 1.000 | 1.000 | 9.364 | 9.364 | 0.00% |
| 29.93 | 0.002 | 0.001 | 0.998 | 0.999 | 9.359 | 9.357 | 0.02% |
| 29.93 | 0.100 | 0.081 | 0.900 | 0.919 | 9.127 | 9.081 | 0.50% |
| 29.93 | 0.200 | 0.176 | 0.800 | 0.824 | 8.939 | 8.904 | 0.39% |
| 29.93 | 0.300 | 0.285 | 0.700 | 0.715 | 8.820 | 8.810 | 0.11% |
| 29.93 | 0.400 | 0.403 | 0.600 | 0.597 | 8.787 | 8.786 | 0.00% |
| 29.93 | 0.500 | 0.527 | 0.500 | 0.473 | 8.854 | 8.830 | 0.27% |
| 29.93 | 0.600 | 0.648 | 0.400 | 0.352 | 9.029 | 8.946 | 0.92% |
| 29.93 | 0.700 | 0.759 | 0.300 | 0.241 | 9.307 | 9.143 | 1.76% |
| 29.93 | 0.800 | 0.856 | 0.200 | 0.144 | 9.670 | 9.443 | 2.35% |
| 29.93 | 0.900 | 0.936 | 0.100 | 0.064 | 10.091 | 9.887 | 2.02% |
| 29.93 | 0.998 | 0.999 | 0.002 | 0.001 | 10.528 | 10.522 | 0.06% |
| 29.93 | 1.000 | 1.000 | 0.000 | 0.000 | 10.537 | 10.537 | |
| 40.00 | 0.000 | 0.000 | 1.000 | 1.000 | 13.703 | 13.703 | 0.00% |
| 40.00 | 0.002 | 0.002 | 0.998 | 0.998 | 13.696 | 13.693 | 0.02% |
| 40.00 | 0.100 | 0.082 | 0.900 | 0.918 | 13.375 | 13.317 | 0.44% |
| 40.00 | 0.200 | 0.177 | 0.800 | 0.823 | 13.118 | 13.073 | 0.34% |
| 40.00 | 0.300 | 0.285 | 0.700 | 0.715 | 12.953 | 12.939 | 0.10% |
| 40.00 | 0.400 | 0.402 | 0.600 | 0.598 | 12.903 | 12.903 | 0.00% |
| 40.00 | 0.500 | 0.523 | 0.500 | 0.477 | 12.986 | 12.959 | 0.21% |
| 40.00 | 0.600 | 0.643 | 0.400 | 0.357 | 13.210 | 13.113 | 0.74% |
| 40.00 | 0.700 | 0.754 | 0.300 | 0.246 | 13.572 | 13.377 | 1.44% |
| 40.00 | 0.800 | 0.851 | 0.200 | 0.149 | 14.051 | 13.778 | 1.94% |
| 40.00 | 0.900 | 0.933 | 0.100 | 0.067 | 14.615 | 14.367 | 1.70% |
| 40.00 | 0.998 | 0.999 | 0.002 | 0.001 | 15.212 | 15.204 | 0.05% |
| 40.00 | 1.000 | 1.000 | 0.000 | 0.000 | 15.224 | 15.224 | 0.00% |
| 60.00 | 0.000 | 0.000 | 1.000 | 1.000 | 26.837 | 26.837 | 0.00% |
| 60.00 | 0.002 | 0.002 | 0.998 | 0.998 | 26.824 | 26.821 | 0.01% |
| 60.00 | 0.100 | 0.084 | 0.900 | 0.916 | 26.251 | 26.158 | 0.35% |
| 60.00 | 0.200 | 0.179 | 0.800 | 0.821 | 25.788 | 25.713 | 0.29% |
| 60.00 | 0.300 | 0.285 | 0.700 | 0.715 | 25.484 | 25.458 | 0.10% |
| 60.00 | 0.400 | 0.400 | 0.600 | 0.600 | 25.373 | 25.373 | 0.00% |
| 60.00 | 0.500 | 0.517 | 0.500 | 0.483 | 25.480 | 25.449 | 0.12% |
| 60.00 | 0.600 | 0.634 | 0.400 | 0.366 | 25.821 | 25.695 | 0.49% |
| 60.00 | 0.700 | 0.744 | 0.300 | 0.256 | 26.395 | 26.131 | 1.00% |
| 60.00 | 0.800 | 0.843 | 0.200 | 0.157 | 27.182 | 26.801 | 1.40% |
| 60.00 | 0.900 | 0.929 | 0.100 | 0.071 | 28.139 | 27.782 | 1.27% |
| 60.00 | 0.998 | 0.999 | 0.002 | 0.001 | 29.190 | 29.178 | 0.04% |
| 60.00 | 1.000 | 1.000 | 0.000 | 0.000 | 29.212 | 29.212 | 0.00% |
| 80.00 | 0.000 | 0.000 | 1.000 | 1.000 | 48.031 | 48.031 | 0.00% |
| 80.00 | 0.002 | 0.002 | 0.998 | 0.998 | 48.009 | 48.003 | 0.01% |
| 80.00 | 0.100 | 0.085 | 0.900 | 0.915 | 47.027 | 46.879 | 0.31% |
| 80.00 | 0.200 | 0.180 | 0.800 | 0.820 | 46.227 | 46.100 | 0.28% |
| 80.00 | 0.300 | 0.285 | 0.700 | 0.715 | 45.683 | 45.632 | 0.11% |
| 80.00 | 0.400 | 0.397 | 0.600 | 0.603 | 45.443 | 45.441 | 0.00% |
| 80.00 | 0.500 | 0.512 | 0.500 | 0.488 | 45.549 | 45.520 | 0.06% |
| 80.00 | 0.600 | 0.627 | 0.400 | 0.373 | 46.030 | 45.879 | 0.33% |
| 80.00 | 0.700 | 0.737 | 0.300 | 0.263 | 46.897 | 46.552 | 0.74% |
| 80.00 | 0.800 | 0.838 | 0.200 | 0.162 | 48.134 | 47.609 | 1.09% |
| 80.00 | 0.900 | 0.926 | 0.100 | 0.074 | 49.696 | 49.178 | 1.04% |
| 80.00 | 0.998 | 0.999 | 0.002 | 0.001 | 51.468 | 51.450 | 0.04% |
| | 1.000 | 1.000 | 0.000 | 0.000 | 51.507 | 51.507 | |
| 100.00 | 0.000 | 0.000 | 1.000 | 1.000 | 79.955 | 79.955 | 0.00% |
| 100.00 | 0.002 | 0.002 | 0.998 | 0.998 | 79.919 | 79.910 | 0.01% |
| 100.00 | 0.100 | 0.085 | 0.900 | 0.915 | 78.280 | 78.042 | 0.30% |
| 100.00 | 0.200 | 0.181 | 0.800 | 0.819 | 76.930 | 76.712 | 0.28% |
| 100.00 | 0.300 | 0.284 | 0.700 | 0.716 | 75.977 | 75.876 | 0.13% |
| 100.00 | 0.400 | 0.395 | 0.600 | 0.605 | 75.495 | 75.485 | 0.01% |
| 100.00 | 0.500 | 0.509 | 0.500 | 0.491 | 75.552 | 75.528 | 0.03% |
| 100.00 | 0.600 | 0.623 | 0.400 | 0.377 | 76.203 | 76.022 | 0.24% |
| 100.00 | 0.700 | 0.733 | 0.300 | 0.267 | 77.483 | 77.027 | 0.59% |
| 100.00 | 0.800 | 0.834 | 0.200 | 0.166 | 79.394 | 78.655 | 0.93% |
| 100.00 | 0.900 | 0.924 | 0.100 | 0.076 | 81.894 | 81.125 | 0.94% |
| 100.00 | 0.998 | 0.999 | 0.002 | 0.001 | 84.822 | 84.792 | 0.03% |
| 100.00 | 1.000 | 1.000 | 0.000 | 0.000 | 84.885 | 84.885 | 0.00% |
| 120.00 | 0.000 | 0.000 | 1.000 | 1.000 | 125.531 | 125.531 | 0.00% |
| 120.00 | 0.002 | 0.002 | 0.998 | 0.998 | 125.471 | 125.457 | 0.01% |
| 120.00 | 0.100 | 0.086 | 0.900 | 0.914 | 122.767 | 122.375 | 0.32% |
| 120.00 | 0.200 | 0.180 | 0.800 | 0.820 | 120.514 | 120.140 | 0.31% |
| 120.00 | 0.300 | 0.283 | 0.700 | 0.717 | 118.878 | 118.686 | 0.16% |
| 120.00 | 0.400 | 0.393 | 0.600 | 0.607 | 117.972 | 117.941 | 0.03% |
| 120.00 | 0.500 | 0.506 | 0.500 | 0.494 | 117.906 | 117.887 | 0.02% |
| 120.00 | 0.600 | 0.620 | 0.400 | 0.380 | 118.781 | 118.558 | 0.19% |
| 120.00 | 0.700 | 0.730 | 0.300 | 0.270 | 120.678 | 120.049 | 0.52% |
| 120.00 | 0.800 | 0.832 | 0.200 | 0.168 | 123.637 | 122.555 | 0.88% |
| 120.00 | 0.900 | 0.923 | 0.100 | 0.077 | 127.636 | 126.452 | 0.93% |
| 120.00 | 0.998 | 0.999 | 0.002 | 0.001 | 132.444 | 132.397 | 0.04% |
| | 1.000 | 1.000 | 0.000 | 0.000 | 132.550 | 132.550 | |
| 140.00 | 0.000 | 0.000 | 1.000 | 1.000 | 187.944 | 187.944 | 0.00% |
| 140.00 | 0.002 | 0.002 | 0.998 | 0.998 | 187.845 | 187.822 | 0.01% |
| 140.00 | 0.100 | 0.086 | 0.900 | 0.914 | 183.369 | 182.711 | 0.36% |
| 140.00 | 0.200 | 0.180 | 0.800 | 0.820 | 179.618 | 178.970 | 0.36% |
| 140.00 | 0.300 | 0.282 | 0.700 | 0.718 | 176.846 | 176.489 | 0.20% |
| 140.00 | 0.400 | 0.391 | 0.600 | 0.609 | 175.222 | 175.146 | 0.04% |
| 140.00 | 0.500 | 0.504 | 0.500 | 0.496 | 174.924 | 174.910 | 0.01% |
| 140.00 | 0.600 | 0.618 | 0.400 | 0.382 | 176.130 | 175.834 | 0.17% |
| 140.00 | 0.700 | 0.728 | 0.300 | 0.272 | 179.002 | 178.083 | 0.51% |
| 140.00 | 0.800 | 0.832 | 0.200 | 0.168 | 183.659 | 181.991 | 0.91% |
| 140.00 | 0.900 | 0.923 | 0.100 | 0.077 | 190.128 | 188.224 | 1.00% |
| 140.00 | 0.998 | 0.999 | 0.002 | 0.001 | 198.098 | 198.018 | 0.04% |
| | 1.000 | 1.000 | 0.000 | 0.000 | 198.275 | 198.275 | 0.00% |

The data in Table 2.4 are broadly summarized in Tables 2.5 and 2.6 below. Azeotrope-like compositions (based on [(BP-VP)/BP] x 100 ≤ 5), are summarized in Table 2.5, and 3% near-azeotropic compositions (where [(BP-VP)/BP] x 100 ≤ 3) are listed in Table 2.6.

**Table 2.5. Predicted Near-Azeotropes of the Z-1233zd/DMM System.**

| **Components** | **T (°C)** | **Z-1233zd /DMM Liquid Mole Percentage Range** |
|---|---|---|
| Z-1233zd / DMM | -40 | 1-62 / 99-38 |
| | | 97-99 / 3-1 |
| Z-1233zd / DMM | -20 | 1-69 /99-31 |
| | | 93-99 / 7-1 |
| Z-1233zd / DMM | 0 | 1-99 / 99-1 |
| Z-1233zd / DMM | 20 | 1-99 / 99-1 |
| Z-1233zd / DMM | 29.9 | 1-99 / 99-1 |
| Z-1233zd / DMM | 40 | 1-99 / 99-1 |
| Z-1233zd / DMM | 60 | 1-99 / 99-1 |
| Z-1233zd / DMM | 80 | 1-99 / 99-1 |
| Z-1233zd / DMM | 100 | 1-99 / 99-1 |
| Z-1233zd / DMM | 120 | 1-99 / 99-1 |
| Z-1233zd / DMM | 140 | 1-99 / 99-1 |

**Table 2.6. Predicted 3% Near-Azeotropes of the Z-1233zd/DMM System.**

| **Components** | **T (°C)** | **Z-1233zd/DMM Liquid Mole Percentage Range** |
|---|---|---|
| Z-1233zd / DMM | -40 | 1-57 / 99-43 |
| Z-1233zd / DMM | -20 | 1-61 /99-39 |
| Z-1233zd / DMM | 0 | 1-68 / 99-32 |
| Z-1233zd / DMM | 20 | 1-99 / 99-1 |
| Z-1233zd / DMM | 29.9 | 1-99 / 99-1 |
| Z-1233zd / DMM | 40 | 1-99 / 99-1 |
| Z-1233zd / DMM | 60 | 1-99 / 99-1 |
| Z-1233zd / DMM | 80 | 1-99 / 99-1 |
| Z-1233zd / DMM | 100 | 1-99 / 99-1 |
| Z-1233zd / DMM | 120 | 1-99 / 99-1 |
| Z-1233zd / DMM | 140 | 1-99 / 99-1 |

At atmospheric pressure, all compositions were found to be 3% near azeotropes.

### EXAMPLE 3: Z-1233zd/HFC-43-10-mee

The binary system of Z-1233zd/ HFC-43-10-mee was explored for potential azeotropic and near-azeotropic behavior. To determine the relative volatility of this binary system, the PTx method described above was used. The pressure in a PTx cell of known volume was measured at constant temperature of 30 °C for various binary compositions. The collected experimental data are displayed in Table 3.1 below.

**Table 3.1. VLE Data for Z-1233zd/ HFC-43-10-mee System at 30 ⁰C.**

| X2 | Y2 | Pexp (psia) | Pcalc (psia) | Pcalc - Pexp (psia) |
|---|---|---|---|---|
| 0.0000 | 0.0000 | 5.8500 | | |
| 0.0610 | 0.1322 | 6.3480 | 6.3498 | 0.0003 |
| 0.1381 | 0.2660 | 6.9310 | 6.9332 | 0.0003 |
| 0.2243 | 0.3849 | 7.5230 | 7.5241 | 0.0001 |
| 0.3099 | 0.4811 | 8.0510 | 8.0518 | 0.0001 |
| 0.3924 | 0.5594 | 8.5070 | 8.5089 | 0.0002 |
| 0.4711 | 0.6247 | 8.9020 | 8.9015 | -0.0001 |
| 0.5326 | 0.6713 | 9.1930 | 9.1809 | -0.0013 |
| 0.6549 | 0.7558 | 9.6750 | 9.6676 | -0.0008 |
| 0.7124 | 0.7936 | 9.8670 | 9.8666 | 0.0000 |
| 0.7659 | 0.8286 | 10.0380 | 10.0349 | -0.0003 |
| 0.8143 | 0.8605 | 10.1560 | 10.1728 | 0.0017 |
| 0.8673 | 0.8967 | 10.2940 | 10.3077 | 0.0013 |
| 0.9172 | 0.9328 | 10.4030 | 10.4173 | 0.0014 |
| 0.9620 | 0.9677 | 10.5020 | 10.4988 | -0.0003 |
| 1.0000 | 1.0000 | 10.5530 | | 99.6% purity |

| | | | | |
|---|---|---|---|---|
| X₂ = liquid mole fraction of Z-1233zd. Y₂ = vapor mole fraction of Z-1233zd. Pₑₓₚ = experimentally measured pressure. | | | | |

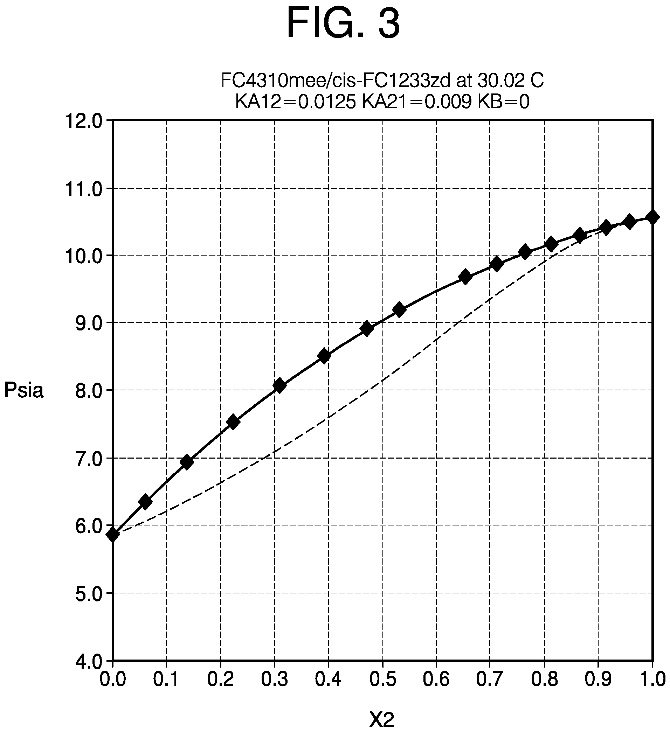

The above vapor pressure v. Z-1233zd liquid mole fraction data are plotted in Figure 3. The experimental data points are shown in Figure 3 as solid points. The solid line represents bubble point predictions using the NRTL equation (see below). The dashed line represents predicted dew points.

The model was run over a temperature range from -40 to 140 deg. C in 20 deg. Increments as well as at 29.93 deg. C. At each temperature, the model was run over the full range from 0 to 1 of Z1233zd liquid molar composition in increments of 0.002. Thus the model was run at a total of 5511 combinations of temperature and Z-1233zd liquid molar composition

(11 temperatures x 501 compositions = 5511). Among those 5511 combinations, some qualify as azeotropic or near-azeotropic, and it is these combinations that Applicant claims. For purposes of brevity, the listing of the 5511 combinations was edited to reflect increments of 0.100 Z-1233zd liquid molar composition, or the boundaries of near-azeotropic behavior. The resulting abridged listing is presented in Table 3.2. HFC-43-10mee is abbreviated to "4310mee" in the table headings.

**Table 3.2. Predicted Near-Azeotropes of the Z-1233zd/HFC-43-10mee System from -40 to 140 deg. C.**

| **Temp. (deg. C)** | **Liquid mol. frac. Z-1233zd** | **Vapor mol. frac. Z-1233zd** | **Liquid mol. frac. 4310mee** | **Vapor mol. frac. 4310mee** | **Bubble Point Pressure (psia)** | **Dew Point Pressure (psia)** | **[(BP-DP)/ BP] x 100** |
|---|---|---|---|---|---|---|---|
| -40.00 | 0.000 | 0.000 | 1.000 | 1.000 | 0.0680 | 0.0680 | 0.00% |
| -40.00 | 0.002 | 0.013 | 0.998 | 0.987 | 0.0687 | 0.0681 | 0.96% |
| -40.00 | 0.010 | 0.063 | 0.990 | 0.937 | 0.0718 | 0.0685 | 4.54% |
| -40.00 | 0.012 | 0.075 | 0.988 | 0.925 | 0.0726 | 0.0687 | 5.37% |
| -40.00 | 0.100 | 0.407 | 0.900 | 0.593 | 0.1036 | 0.0743 | 28.32% |
| -40.00 | 0.200 | 0.587 | 0.800 | 0.413 | 0.1339 | 0.0819 | 38.88% |
| -40.00 | 0.300 | 0.691 | 0.700 | 0.309 | 0.1599 | 0.0911 | 43.02% |
| -40.00 | 0.400 | 0.760 | 0.600 | 0.240 | 0.1824 | 0.1027 | 43.71% |
| -40.00 | 0.500 | 0.811 | 0.500 | 0.189 | 0.2021 | 0.1174 | 41.89% |
| -40.00 | 0.600 | 0.852 | 0.400 | 0.148 | 0.2196 | 0.1367 | 37.72% |
| -40.00 | 0.700 | 0.888 | 0.300 | 0.112 | 0.2355 | 0.1627 | 30.90% |
| -40.00 | 0.800 | 0.922 | 0.200 | 0.078 | 0.2503 | 0.1977 | 21.00% |
| -40.00 | 0.900 | 0.958 | 0.100 | 0.042 | 0.2647 | 0.2409 | 8.97% |
| -40.00 | 0.936 | 0.972 | 0.064 | 0.028 | 0.2698 | 0.2562 | 5.04% |
| -40.00 | 0.938 | 0.973 | 0.062 | 0.027 | 0.2701 | 0.2570 | 4.84% |
| -40.00 | 0.998 | 0.999 | 0.002 | 0.001 | 0.2788 | 0.2784 | 0.11% |
| -40.00 | 1.000 | 1.000 | 0.000 | 0.000 | 0.2790 | 0.2790 | 0.00% |
| -20.00 | 0.000 | 0.000 | 1.000 | 1.000 | 0.3319 | 0.3319 | 0.00% |
| -20.00 | 0.002 | 0.009 | 0.998 | 0.991 | 0.3343 | 0.3324 | 0.57% |
| -20.00 | 0.018 | 0.078 | 0.982 | 0.922 | 0.3534 | 0.3366 | 4.75% |
| -20.00 | 0.020 | 0.086 | 0.980 | 0.914 | 0.3558 | 0.3372 | 5.23% |
| -20.00 | 0.100 | 0.326 | 0.900 | 0.674 | 0.4447 | 0.3601 | 19.01% |
| -20.00 | 0.200 | 0.503 | 0.800 | 0.497 | 0.5424 | 0.3935 | 27.45% |
| -20.00 | 0.300 | 0.616 | 0.700 | 0.384 | 0.6272 | 0.4333 | 30.92% |
| -20.00 | 0.400 | 0.697 | 0.600 | 0.303 | 0.7012 | 0.4814 | 31.34% |
| -20.00 | 0.500 | 0.759 | 0.500 | 0.241 | 0.7662 | 0.5405 | 29.45% |
| -20.00 | 0.600 | 0.811 | 0.400 | 0.189 | 0.8237 | 0.6136 | 25.50% |
| -20.00 | 0.700 | 0.856 | 0.300 | 0.144 | 0.8754 | 0.7041 | 19.58% |
| -20.00 | 0.800 | 0.900 | 0.200 | 0.100 | 0.9228 | 0.8115 | 12.06% |
| -20.00 | 0.892 | 0.942 | 0.108 | 0.058 | 0.9635 | 0.9142 | 5.12% |
| -20.00 | 0.894 | 0.943 | 0.106 | 0.057 | 0.9644 | 0.9163 | 4.98% |
| -20.00 | 0.998 | 0.999 | 0.002 | 0.001 | 1.0077 | 1.0072 | 0.05% |
| -20.00 | 1.000 | 1.000 | 0.000 | 0.000 | 1.0086 | 1.0086 | 0.00% |
| 0.00 | 0.000 | 0.000 | 1.000 | 1.000 | 1.1959 | 1.1959 | 0.00% |
| 0.00 | 0.002 | 0.007 | 0.998 | 0.993 | 1.2020 | 1.1976 | 0.36% |
| 0.00 | 0.030 | 0.097 | 0.970 | 0.903 | 1.2853 | 1.2223 | 4.90% |
| 0.00 | 0.032 | 0.103 | 0.968 | 0.897 | 1.2912 | 1.2241 | 5.19% |
| 0.00 | 0.100 | 0.270 | 0.900 | 0.730 | 1.4811 | 1.2885 | 13.00% |
| 0.00 | 0.200 | 0.439 | 0.800 | 0.561 | 1.7318 | 1.3957 | 19.41% |
| 0.00 | 0.300 | 0.557 | 0.700 | 0.443 | 1.9520 | 1.5207 | 22.10% |
| 0.00 | 0.400 | 0.645 | 0.600 | 0.355 | 2.1454 | 1.6674 | 22.28% |
| 0.00 | 0.500 | 0.716 | 0.500 | 0.284 | 2.3156 | 1.8404 | 20.52% |
| 0.00 | 0.600 | 0.776 | 0.400 | 0.224 | 2.4660 | 2.0434 | 17.14% |
| 0.00 | 0.700 | 0.830 | 0.300 | 0.170 | 2.5997 | 2.2765 | 12.43% |
| 0.00 | 0.800 | 0.882 | 0.200 | 0.118 | 2.7197 | 2.5269 | 7.09% |
| 0.00 | 0.840 | 0.903 | 0.160 | 0.097 | 2.7642 | 2.6244 | 5.06% |
| 0.00 | 0.842 | 0.904 | 0.158 | 0.096 | 2.7664 | 2.6292 | 4.96% |
| 0.00 | 0.900 | 0.937 | 0.100 | 0.063 | 2.8275 | 2.7578 | 2.47% |
| 0.00 | 0.998 | 0.999 | 0.002 | 0.001 | 2.9205 | 2.9198 | 0.03% |
| | 1.000 | 1.000 | 0.000 | 0.000 | 2.9223 | 2.9223 | 0.00% |
| 20.00 | 0.000 | 0.000 | 1.000 | 1.000 | 3.4438 | 3.4438 | 0.00% |
| 20.00 | 0.002 | 0.006 | 0.998 | 0.994 | 3.4566 | 3.4483 | 0.24% |
| 20.00 | 0.046 | 0.118 | 0.954 | 0.882 | 3.7313 | 3.5510 | 4.83% |
| 20.00 | 0.048 | 0.122 | 0.952 | 0.878 | 3.7435 | 3.5558 | 5.01% |
| 20.00 | 0.100 | 0.231 | 0.900 | 0.769 | 4.0502 | 3.6850 | 9.02% |
| 20.00 | 0.200 | 0.390 | 0.800 | 0.610 | 4.5899 | 3.9589 | 13.75% |
| 20.00 | 0.300 | 0.509 | 0.700 | 0.491 | 5.0685 | 4.2709 | 15.74% |
| 20.00 | 0.400 | 0.602 | 0.600 | 0.398 | 5.4915 | 4.6267 | 15.75% |
| 20.00 | 0.500 | 0.679 | 0.500 | 0.321 | 5.8645 | 5.0306 | 14.22% |
| 20.00 | 0.600 | 0.746 | 0.400 | 0.254 | 6.1930 | 5.4822 | 11.48% |
| 20.00 | 0.700 | 0.807 | 0.300 | 0.193 | 6.4821 | 5.9684 | 7.92% |
| 20.00 | 0.778 | 0.853 | 0.222 | 0.147 | 6.6828 | 6.3483 | 5.01% |
| 20.00 | 0.780 | 0.854 | 0.220 | 0.146 | 6.6877 | 6.3578 | 4.93% |
| 20.00 | 0.800 | 0.866 | 0.200 | 0.134 | 6.7357 | 6.4510 | 4.23% |
| 20.00 | 0.900 | 0.929 | 0.100 | 0.071 | 6.9549 | 6.8612 | 1.35% |
| 20.00 | 0.998 | 0.998 | 0.002 | 0.002 | 7.1306 | 7.1298 | 0.01% |
| 20.00 | 1.000 | 1.000 | 0.000 | 0.000 | 7.1337 | 7.1337 | 0.00% |
| 29.93 | 0.000 | 0.000 | 1.000 | 1.000 | 5.4729 | 5.4729 | 0.00% |
| 29.93 | 0.002 | 0.005 | 0.998 | 0.995 | 5.4906 | 5.4798 | 0.20% |
| 29.93 | 0.058 | 0.134 | 0.942 | 0.866 | 5.9708 | 5.6790 | 4.89% |
| 29.93 | 0.060 | 0.138 | 0.940 | 0.862 | 5.9874 | 5.6863 | 5.03% |
| 29.93 | 0.100 | 0.215 | 0.900 | 0.785 | 6.3123 | 5.8371 | 7.53% |
| 29.93 | 0.200 | 0.370 | 0.800 | 0.630 | 7.0635 | 6.2466 | 11.57% |
| 29.93 | 0.300 | 0.488 | 0.700 | 0.512 | 7.7325 | 6.7078 | 13.25% |
| 29.93 | 0.400 | 0.583 | 0.600 | 0.417 | 8.3253 | 7.2261 | 13.20% |
| 29.93 | 0.500 | 0.663 | 0.500 | 0.337 | 8.8483 | 7.8042 | 11.80% |
| 29.93 | 0.600 | 0.732 | 0.400 | 0.268 | 9.3081 | 8.4359 | 9.37% |
| 29.93 | 0.700 | 0.797 | 0.300 | 0.203 | 9.7105 | 9.0969 | 6.32% |
| 29.93 | 0.740 | 0.822 | 0.260 | 0.178 | 9.8563 | 9.3582 | 5.05% |
| 29.93 | 0.742 | 0.823 | 0.258 | 0.177 | 9.8634 | 9.3711 | 4.99% |
| 29.93 | 0.800 | 0.859 | 0.200 | 0.141 | 10.0595 | 9.7312 | 3.26% |
| 29.93 | 0.900 | 0.925 | 0.100 | 0.075 | 10.3547 | 10.2520 | 0.99% |
| 29.93 | 0.998 | 0.998 | 0.002 | 0.002 | 10.5816 | 10.5808 | 0.01% |
| 29.93 | 1.000 | 1.000 | 0.000 | 0.000 | 10.5854 | 10.5854 | |
| 40.00 | 0.000 | 0.000 | 1.000 | 1.000 | 8.3654 | 8.3654 | 0.00% |
| 40.00 | 0.002 | 0.005 | 0.998 | 0.995 | 8.3890 | 8.3754 | 0.16% |
| 40.00 | 0.074 | 0.155 | 0.926 | 0.845 | 9.2100 | 8.7510 | 4.98% |
| 40.00 | 0.076 | 0.159 | 0.924 | 0.841 | 9.2319 | 8.7618 | 5.09% |
| 40.00 | 0.100 | 0.201 | 0.900 | 0.799 | 9.4917 | 8.8939 | 6.30% |
| 40.00 | 0.200 | 0.352 | 0.800 | 0.648 | 10.5049 | 9.4827 | 9.73% |
| 40.00 | 0.300 | 0.469 | 0.700 | 0.531 | 11.4106 | 10.1383 | 11.15% |
| 40.00 | 0.400 | 0.566 | 0.600 | 0.434 | 12.2150 | 10.8649 | 11.05% |
| 40.00 | 0.500 | 0.647 | 0.500 | 0.353 | 12.9251 | 11.6613 | 9.78% |
| 40.00 | 0.600 | 0.720 | 0.400 | 0.280 | 13.5479 | 12.5129 | 7.64% |
| 40.00 | 0.700 | 0.787 | 0.300 | 0.213 | 14.0897 | 13.3805 | 5.03% |
| 40.00 | 0.702 | 0.788 | 0.298 | 0.212 | 14.0998 | 13.3976 | 4.98% |
| 40.00 | 0.800 | 0.853 | 0.200 | 0.147 | 14.5541 | 14.1878 | 2.52% |
| 40.00 | 0.900 | 0.922 | 0.100 | 0.078 | 14.9380 | 14.8296 | 0.73% |
| 40.00 | 0.998 | 0.998 | 0.002 | 0.002 | 15.2195 | 15.2187 | 0.00% |
| 40.00 | 1.000 | 1.000 | 0.000 | 0.000 | 15.2240 | 15.2240 | 0.00% |
| 60.00 | 0.000 | 0.000 | 1.000 | 1.000 | 17.8054 | 17.8054 | 0.00% |
| 60.00 | 0.002 | 0.004 | 0.998 | 0.996 | 17.8448 | 17.8248 | 0.11% |
| 60.00 | 0.100 | 0.179 | 0.900 | 0.821 | 19.6882 | 18.8191 | 4.41% |
| 60.00 | 0.118 | 0.207 | 0.882 | 0.793 | 20.0086 | 19.0115 | 4.98% |
| 60.00 | 0.120 | 0.210 | 0.880 | 0.790 | 20.0438 | 19.0330 | 5.04% |
| 60.00 | 0.200 | 0.321 | 0.800 | 0.679 | 21.3967 | 19.9276 | 6.87% |
| 60.00 | 0.300 | 0.437 | 0.700 | 0.563 | 22.9338 | 21.1345 | 7.85% |
| 60.00 | 0.400 | 0.535 | 0.600 | 0.465 | 24.3040 | 22.4363 | 7.68% |
| 60.00 | 0.500 | 0.620 | 0.500 | 0.380 | 25.5135 | 23.8160 | 6.65% |
| 60.00 | 0.600 | 0.697 | 0.400 | 0.303 | 26.5684 | 25.2322 | 5.03% |
| 60.00 | 0.602 | 0.699 | 0.398 | 0.301 | 26.5880 | 25.2604 | 4.99% |
| 60.00 | 0.700 | 0.770 | 0.300 | 0.230 | 27.4736 | 26.6056 | 3.16% |
| 60.00 | 0.800 | 0.841 | 0.200 | 0.159 | 28.2287 | 27.8133 | 1.47% |
| 60.00 | 0.900 | 0.916 | 0.100 | 0.084 | 28.8212 | 28.7136 | 0.37% |
| 60.00 | 0.998 | 0.998 | 0.002 | 0.002 | 29.2069 | 29.2064 | 0.00% |
| 60.00 | 1.000 | 1.000 | 0.000 | 0.000 | 29.2123 | 29.2123 | 0.00% |
| 80.00 | 0.000 | 0.000 | 1.000 | 1.000 | 34.1318 | 34.1318 | 0.00% |
| 80.00 | 0.002 | 0.004 | 0.998 | 0.996 | 34.1923 | 34.1656 | 0.08% |
| 80.00 | 0.100 | 0.162 | 0.900 | 0.838 | 37.0346 | 35.8870 | 3.10% |
| 80.00 | 0.200 | 0.296 | 0.800 | 0.704 | 39.6869 | 37.7715 | 4.83% |
| 80.00 | 0.216 | 0.315 | 0.784 | 0.685 | 40.0877 | 38.0847 | 5.00% |
| 80.00 | 0.218 | 0.317 | 0.782 | 0.683 | 40.1374 | 38.1241 | 5.02% |
| 80.00 | 0.300 | 0.409 | 0.700 | 0.591 | 42.0847 | 39.7786 | 5.48% |
| 80.00 | 0.400 | 0.508 | 0.600 | 0.492 | 44.2265 | 41.8870 | 5.29% |
| 80.00 | 0.442 | 0.546 | 0.558 | 0.454 | 45.0500 | 42.7930 | 5.01% |
| 80.00 | 0.444 | 0.548 | 0.556 | 0.452 | 45.0881 | 42.8363 | 4.99% |
| 80.00 | 0.500 | 0.596 | 0.500 | 0.404 | 46.1135 | 44.0512 | 4.47% |
| 80.00 | 0.600 | 0.678 | 0.400 | 0.322 | 47.7468 | 46.1888 | 3.26% |
| 80.00 | 0.700 | 0.755 | 0.300 | 0.245 | 49.1251 | 48.1693 | 1.95% |
| 80.00 | 0.800 | 0.831 | 0.200 | 0.169 | 50.2384 | 49.8196 | 0.83% |
| 80.00 | 0.900 | 0.911 | 0.100 | 0.089 | 51.0561 | 50.9657 | 0.18% |
| 80.00 | 0.998 | 0.998 | 0.002 | 0.002 | 51.5019 | 51.5017 | 0.00% |
| | 1.000 | 1.000 | 0.000 | 0.000 | 51.5065 | 51.5065 | |
| 100.00 | 0.000 | 0.000 | 1.000 | 1.000 | 60.1374 | 60.1374 | 0.00% |
| 100.00 | 0.002 | 0.003 | 0.998 | 0.997 | 60.2250 | 60.1921 | 0.05% |
| 100.00 | 0.100 | 0.148 | 0.900 | 0.852 | 64.3551 | 62.9516 | 2.18% |
| 100.00 | 0.200 | 0.275 | 0.800 | 0.725 | 68.2291 | 65.9189 | 3.39% |
| 100.00 | 0.300 | 0.386 | 0.700 | 0.614 | 71.7421 | 69.0116 | 3.81% |
| 100.00 | 0.400 | 0.486 | 0.600 | 0.514 | 74.8807 | 72.1775 | 3.61% |
| 100.00 | 0.500 | 0.576 | 0.500 | 0.424 | 77.6345 | 75.3279 | 2.97% |
| 100.00 | 0.600 | 0.661 | 0.400 | 0.339 | 79.9938 | 78.3264 | 2.08% |
| 100.00 | 0.700 | 0.742 | 0.300 | 0.258 | 81.9440 | 80.9846 | 1.17% |
| 100.00 | 0.800 | 0.823 | 0.200 | 0.177 | 83.4575 | 83.0805 | 0.45% |
| 100.00 | 0.900 | 0.907 | 0.100 | 0.093 | 84.4768 | 84.4146 | 0.07% |
| 100.00 | 0.998 | 0.998 | 0.002 | 0.002 | 84.8843 | 84.8843 | 0.00% |
| 100.00 | 1.000 | 1.000 | 0.000 | 0.000 | 84.8853 | 84.8853 | 0.00% |
| 120.00 | 0.000 | 0.000 | 1.000 | 1.000 | 98.8993 | 98.8993 | 0.00% |
| 120.00 | 0.002 | 0.003 | 0.998 | 0.997 | 99.0215 | 98.9831 | 0.04% |
| 120.00 | 0.100 | 0.137 | 0.900 | 0.863 | 104.7995 | 103.1798 | 1.55% |
| 120.00 | 0.200 | 0.258 | 0.800 | 0.742 | 110.2376 | 107.6130 | 2.38% |
| 120.00 | 0.300 | 0.367 | 0.700 | 0.633 | 115.1747 | 112.1356 | 2.64% |
| 120.00 | 0.400 | 0.467 | 0.600 | 0.533 | 119.5766 | 116.6474 | 2.45% |
| 120.00 | 0.500 | 0.559 | 0.500 | 0.441 | 123.4131 | 121.0009 | 1.95% |
| 120.00 | 0.600 | 0.646 | 0.400 | 0.354 | 126.6546 | 124.9944 | 1.31% |
| 120.00 | 0.700 | 0.731 | 0.300 | 0.269 | 129.2657 | 128.3788 | 0.69% |
| 120.00 | 0.800 | 0.816 | 0.200 | 0.184 | 131.1928 | 130.8897 | 0.23% |
| 120.00 | 0.900 | 0.904 | 0.100 | 0.096 | 132.3437 | 132.3115 | 0.02% |
| 120.00 | 0.998 | 0.998 | 0.002 | 0.002 | 132.5570 | 132.5569 | 0.00% |
| | 1.000 | 1.000 | 0.000 | 0.000 | 132.5503 | 132.5503 | |
| 140.00 | 0.000 | 0.000 | 1.000 | 1.000 | 153.6232 | 153.6232 | 0.00% |
| 140.00 | 0.002 | 0.003 | 0.998 | 0.997 | 153.7917 | 153.7485 | 0.03% |
| 140.00 | 0.100 | 0.128 | 0.900 | 0.872 | 161.7708 | 159.9762 | 1.11% |
| 140.00 | 0.200 | 0.244 | 0.800 | 0.756 | 169.2911 | 166.4385 | 1.69% |
| 140.00 | 0.300 | 0.351 | 0.700 | 0.649 | 176.1079 | 172.8860 | 1.83% |
| 140.00 | 0.400 | 0.450 | 0.600 | 0.550 | 182.1522 | 179.1450 | 1.65% |
| 140.00 | 0.500 | 0.544 | 0.500 | 0.456 | 187.3617 | 184.9877 | 1.27% |
| 140.00 | 0.600 | 0.634 | 0.400 | 0.366 | 191.6773 | 190.1364 | 0.80% |
| 140.00 | 0.700 | 0.722 | 0.300 | 0.278 | 195.0356 | 194.2849 | 0.38% |
| 140.00 | 0.800 | 0.810 | 0.200 | 0.190 | 197.3537 | 197.1419 | 0.11% |
| 140.00 | 0.900 | 0.902 | 0.100 | 0.098 | 198.5046 | 198.4955 | 0.00% |
| 140.00 | 0.998 | 0.998 | 0.002 | 0.002 | 198.2953 | 198.2947 | 0.00% |
| | 1.000 | 1.000 | 0.000 | 0.000 | 198.2752 | 198.2752 | 0.00% |

The near-azeotropes of the Z-1233zd/HFC-43-10mee system at atmospheric pressure were also modeled. At each temperature, the model was run over the full range from 0 to 1 of Z-1233zd liquid molar composition in increments of 0.002. Among the combinations, some qualify as azeotropic or near-azeotropic, and it is these combinations that Applicant claims. For purposes of brevity, the listing of the combinations was edited to reflect increments of 0.1 Z-1233zd liquid molar composition, or the boundaries of near-azeotropic behavior. The resulting abridged listing is presented in Table 3.3.

**Table 3.3. Predicted Near-Azeotropes of the Z-1233zd/HFC-43-10mee System at 1 Atm.**

| **Pressure (atm)** | **Temp. (deg. C)** | **Liquid mol. frac. Z-1233zd** | **Vapor mol. frac. Z-1233zd** | **Liquid mol. frac. 4310mee** | **Vapor mol. frac. 4310mee** | **Bubble Point Pressure (psia)** | **Dew Point Pressure (psia)** | **[(BP-DP)/ BP] x 100** |
|---|---|---|---|---|---|---|---|---|
| 1.00 | 54.620 | 0.000 | 0.000 | 1.000 | 1.000 | 14.696 | 14.696 | 0.00% |
| 1.00 | 54.555 | 0.002 | 0.004 | 0.998 | 0.996 | 14.696 | 14.678 | 0.12% |
| 1.00 | 51.734 | 0.096 | 0.181 | 0.904 | 0.819 | 14.696 | 13.968 | 4.96% |
| 1.00 | 51.678 | 0.098 | 0.184 | 0.902 | 0.816 | 14.696 | 13.955 | 5.04% |
| 1.00 | 51.623 | 0.100 | 0.188 | 0.900 | 0.812 | 14.696 | 13.943 | 5.12% |
| 1.00 | 49.075 | 0.200 | 0.337 | 0.800 | 0.663 | 14.696 | 13.475 | 8.31% |
| 1.00 | 46.918 | 0.300 | 0.457 | 0.700 | 0.543 | 14.696 | 13.244 | 9.88% |
| 1.00 | 45.096 | 0.400 | 0.557 | 0.600 | 0.443 | 14.696 | 13.214 | 10.08% |
| 1.00 | 43.560 | 0.500 | 0.642 | 0.500 | 0.358 | 14.696 | 13.353 | 9.14% |
| 1.00 | 42.266 | 0.600 | 0.717 | 0.400 | 0.283 | 14.696 | 13.624 | 7.29% |
| 1.00 | 41.239 | 0.694 | 0.782 | 0.306 | 0.218 | 14.696 | 13.954 | 5.05% |
| 1.00 | 41.219 | 0.696 | 0.783 | 0.304 | 0.217 | 14.696 | 13.961 | 5.00% |
| 1.00 | 41.199 | 0.698 | 0.785 | 0.302 | 0.215 | 14.696 | 13.969 | 4.95% |
| 1.00 | 41.179 | 0.700 | 0.786 | 0.300 | 0.214 | 14.696 | 13.976 | 4.90% |
| 1.00 | 40.273 | 0.800 | 0.853 | 0.200 | 0.147 | 14.696 | 14.329 | 2.50% |
| 1.00 | 39.539 | 0.900 | 0.922 | 0.100 | 0.078 | 14.696 | 14.588 | 0.74% |
| 1.00 | 39.005 | 0.998 | 0.998 | 0.002 | 0.002 | 14.696 | 14.695 | 0.01% |
| 1.00 | 38.996 | 1.000 | 1.000 | 0.000 | 0.000 | 14.696 | 14.696 | 0.00% |

The data in Tables 3.2 and 3.3 are broadly summarized in Tables 3.4 and 3.5 below. The broad ranges of azeotrope-like compositions (based on [(BP-VP)/BP] x 100 ≤ 5) are summarized in Table 3.4, and compositions that meet the 3% near-azeotropic criterion ([(BP-VP)/BP] x 100 ≤ 3) are summarized in Table 3.5.

**Table 3.4. Summarized Near-Azeotropes of the Z-1233zd/HFC-43-10mee System.**

| **Components** | **T (°C)** | **Z-1233zd/HFC-43-10mee Liquid Mole Percentage Range** |
|---|---|---|
| Z-1233zd / HFC-43-10mee | -40 | 94-99 / 6-1 |
| Z-1233zd / HFC-43-10mee | -20 | 90-99 / 10-1 |
| Z-1233zd / HFC-43-10mee | 0 | 1-3/99-97 |
| | | 85-99 / 15-1 |
| Z-1233zd / HFC-43-10mee | 20 | 1-4 / 99-96 |
| | | 78-99 / 22-1 |
| Z-1233zd / HFC-43-10mee | 30.02 | 1-5 / 99-95 |
| | | 75-99 / 25-1 |
| Z-1233zd / HFC-43-10mee | 40 | 1-7 / 99-93 |
| | | 71-99 / 29-1 |
| Z-1233zd / HFC-43-10mee | 60 | 1-11 / 89-99 |
| | | 61-99 / 39-1 |
| Z-1233zd / HFC-43-10mee | 80 | 1-21 / 79-99 |
| | | 45-99 / 55-1 |
| Z-1233zd / HFC-43-10mee | 100 | 1-99 / 99-1 |
| Z-1233zd / HFC-43-10mee | 120 | 1-99 / 99-1 |
| Z-1233zd / HFC-43-10mee | 140 | 1-99 / 99-1 |

**Table 3.5. Summarized 3% Near-Azeotropes of the Z-1233zd/HFC-43-10mee System.**

| **Components** | **T (°C)** | **Z-1233zd/HFC-43-10mee Liquid Mole Percentage Range** |
|---|---|---|
| Z-1233zd / HFC-4310mee | -40 | 96-99 / 4-1 |
| Z-1233zd / HFC-4310mee | -20 | 93-99 / 7-1 |
| Z-1233zd / HFC-4310mee | 0 | 89-99 / 11-1 |
| Z-1233zd / HFC-4310mee | 20 | 84-99 / 16-1 |
| Z-1233zd / HFC-4310mee | 30.02 | 81-99 / 19-1 |
| Z-1233zd / HFC-4310mee | 40 | 1-4 / 99-96 |
| | | 78-99 / 22-1 |
| Z-1233zd / HFC-4310mee | 60 | 1-6 / 99-94 |
| | | 71-99 / 29-1 |
| Z-1233zd / HFC-4310mee | 80 | 1-9 / 99-91 |
| | | 62-99 / 38-1 |
| Z-1233zd / HFC-4310mee | 100 | 1-15 / 99-85 |
| | | 50-99 |
| Z-1233zd / HFC-4310mee | 120 | 1-99 / 99-1 |
| Z-1233zd / HFC-4310mee | 140 | 1-99 / 99-1 |

At atmospheric pressure , near azeotropic compositions were predicted at Z-1233zd/HFC-43-10mee mole percentage ratios of 1-9 / 99-91 and 70-99/30-1 . 3% near azeotropic compositions were predicted at Z-1233zd/HFC-43-10mee mole percentage ratios of 1-5 / 99-95 and 78-99 / 22-1

### EXAMPLE 4: Z-1233zd/HFC-245fa

The binary system of Z-1233zd/HFC-245fa was explored for potential azeotropic and near-azeotropic behavior. To determine the relative volatility of this binary system, the PTx method described above was used. The pressure in a PTx cell of known volume was measured at constant temperature of 30 °C for various binary compositions. The collected experimental data are displayed in Table 4.1 below.

**Table 4.1. Experimental VLE Data for the Z-1233zd/HFC-245fa System at 30 deg. C.**

| X₂ | Y₂ | Pexp (psia) | Pcalc (psia) | Pcalc - Pexp (psia) |
|---|---|---|---|---|
| 0.000 | 0.000 | 25.8120 | | |
| 0.039 | 0.022 | 25.4290 | 25.3665 | -0.0025 |
| 0.085 | 0.049 | 24.8830 | 24.8259 | -0.0023 |
| 0.134 | 0.076 | 24.2920 | 24.2544 | -0.0015 |
| 0.191 | 0.108 | 23.6040 | 23.5738 | -0.0013 |
| 0.264 | 0.149 | 22.6980 | 22.6837 | -0.0006 |
| 0.323 | 0.184 | 21.9630 | 21.9401 | -0.0010 |
| 0.389 | 0.223 | 21.1220 | 21.0900 | -0.0015 |
| 0.531 | 0.319 | 19.0760 | 19.1176 | 0.0022 |
| 0.597 | 0.371 | 18.1040 | 18.1387 | 0.0019 |
| 0.662 | 0.429 | 17.0830 | 17.1123 | 0.0017 |
| 0.731 | 0.501 | 15.9240 | 15.9384 | 0.0009 |
| 0.804 | 0.592 | 14.6430 | 14.6393 | -0.0003 |
| 0.874 | 0.704 | 13.2870 | 13.2640 | -0.0017 |
| 0.942 | 0.843 | 11.8760 | 11.8452 | -0.0026 |
| 1.000 | 1.000 | 10.5540 | | |

| | | | | |
|---|---|---|---|---|
| X₂ = liquid mole fraction of Z-1233zd. Y₂ = vapor mole fraction of Z-1233zd. Pₑₓₚ = experimentally measured pressure. | | | | |

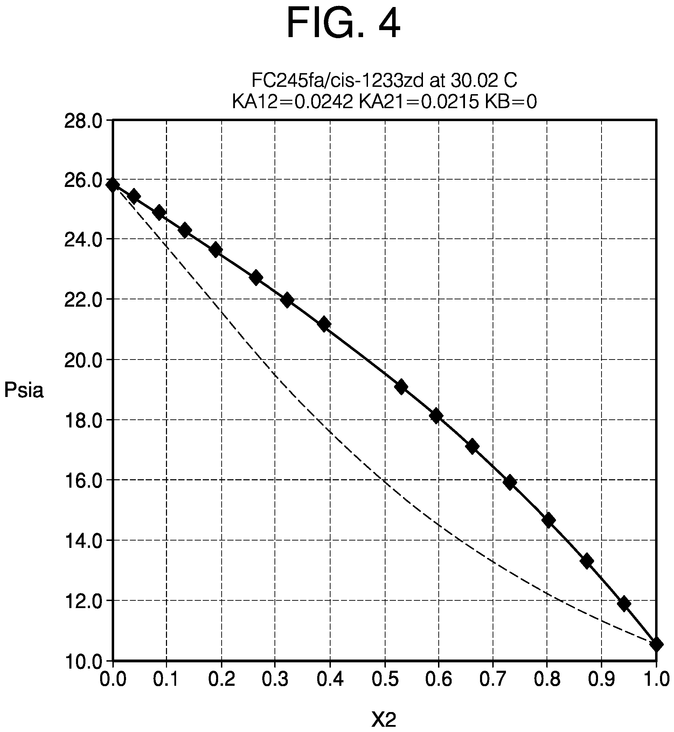

The above vapor pressure v. Z-1233zd liquid mole fraction data are plotted in Figure 4. The experimental data points are shown in Figure 4 as solid points. The solid line represents bubble point predictions using the NRTL equation (see below). The dashed line represents predicted dew points.

Based on these VLE data, interaction coefficients were extracted. The NRTL model was run over a temperature range from -40 to 140 deg. C in 20 deg. Increments, as well as at 29.93 deg. C. At each temperature, the model was run over the full range from 0 to 1 of Z-1233zd liquid molar composition in increments of 0.002. Thus the model was run at a total of 5511 combinations of temperature and Z-1233zd liquid molar composition (11 temperatures x 501 compositions = 5511). Among those 5511 combinations, some qualify as near-azeotropic, and it is these combinations that Applicant claims. For purposes of brevity, the listing of the 5511 combinations was edited to reflect increments of 0.100 Z-1233zd liquid molar composition, or the boundaries of near-azeotropic behavior. The resulting abridged listing is presented in Table 4.2.

**Table 4.2. Predicted Near-Azeotropes of the Z-1233zd/HFC-245fa System.**

| **Temp. (deg. C)** | **Liquid mol. frac. Z-1233zd** | **Vapor mol. frac. Z-1233zd** | **Liquid mol. frac. HFC-245fa** | **Vapor mol. frac. HFC-245fa** | **Bubble Point Pressure (psia)** | **Dew Point Pressure (psia)** | **[(BP-DP)/ BP] x 100** |
|---|---|---|---|---|---|---|---|
| -40.00 | 0.000 | 0.000 | 1.000 | 1.000 | 0.8144 | 0.8144 | 0.00% |
| -40.00 | 0.002 | 0.001 | 0.998 | 0.999 | 0.8137 | 0.8131 | 0.07% |
| -40.00 | 0.100 | 0.053 | 0.900 | 0.947 | 0.7783 | 0.7421 | 4.65% |
| -40.00 | 0.104 | 0.055 | 0.896 | 0.945 | 0.7768 | 0.7389 | 4.88% |
| -40.00 | 0.106 | 0.056 | 0.894 | 0.944 | 0.7761 | 0.7373 | 5.00% |
| -40.00 | 0.108 | 0.057 | 0.892 | 0.943 | 0.7753 | 0.7357 | 5.12% |
| -40.00 | 0.200 | 0.101 | 0.800 | 0.899 | 0.7409 | 0.6585 | 11.13% |
| -40.00 | 0.300 | 0.149 | 0.700 | 0.851 | 0.7019 | 0.5775 | 17.73% |
| -40.00 | 0.400 | 0.198 | 0.600 | 0.802 | 0.6605 | 0.5073 | 23.19% |
| -40.00 | 0.500 | 0.252 | 0.500 | 0.748 | 0.6153 | 0.4493 | 26.98% |
| -40.00 | 0.600 | 0.316 | 0.400 | 0.684 | 0.5651 | 0.4017 | 28.92% |
| -40.00 | 0.700 | 0.398 | 0.300 | 0.602 | 0.5084 | 0.3625 | 28.69% |
| -40.00 | 0.800 | 0.512 | 0.200 | 0.488 | 0.4432 | 0.3299 | 25.56% |
| -40.00 | 0.900 | 0.686 | 0.100 | 0.314 | 0.3675 | 0.3024 | 17.71% |
| -40.00 | 0.978 | 0.911 | 0.022 | 0.089 | 0.2997 | 0.2839 | 5.29% |
| -40.00 | 0.980 | 0.918 | 0.020 | 0.082 | 0.2979 | 0.2834 | 4.85% |
| -40.00 | 0.998 | 0.991 | 0.002 | 0.009 | 0.2810 | 0.2795 | 0.53% |
| -40.00 | 1.000 | 1.000 | 0.000 | 0.000 | 0.2790 | 0.2790 | 0.00% |
| -20.00 | 0.000 | 0.000 | 1.000 | 1.000 | 2.7787 | 2.7787 | 0.00% |
| -20.00 | 0.002 | 0.001 | 0.998 | 0.999 | 2.7762 | 2.7744 | 0.07% |
| -20.00 | 0.100 | 0.054 | 0.900 | 0.946 | 2.6548 | 2.5384 | 4.39% |
| -20.00 | 0.110 | 0.059 | 0.890 | 0.941 | 2.6423 | 2.5123 | 4.92% |
| -20.00 | 0.112 | 0.060 | 0.888 | 0.940 | 2.6397 | 2.5070 | 5.03% |
| -20.00 | 0.200 | 0.104 | 0.800 | 0.896 | 2.5271 | 2.2707 | 10.14% |
| -20.00 | 0.300 | 0.154 | 0.700 | 0.846 | 2.3939 | 2.0119 | 15.96% |
| -20.00 | 0.400 | 0.207 | 0.600 | 0.793 | 2.2527 | 1.7840 | 20.81% |
| -20.00 | 0.500 | 0.265 | 0.500 | 0.735 | 2.1002 | 1.5918 | 24.21% |
| -20.00 | 0.600 | 0.333 | 0.400 | 0.667 | 1.9325 | 1.4317 | 25.92% |
| -20.00 | 0.700 | 0.419 | 0.300 | 0.581 | 1.7450 | 1.2980 | 25.61% |
| -20.00 | 0.800 | 0.535 | 0.200 | 0.465 | 1.5325 | 1.1857 | 22.63% |
| -20.00 | 0.900 | 0.707 | 0.100 | 0.293 | 1.2892 | 1.0903 | 15.43% |
| -20.00 | 0.974 | 0.905 | 0.026 | 0.095 | 1.0855 | 1.0286 | 5.24% |
| -20.00 | 0.976 | 0.912 | 0.024 | 0.088 | 1.0797 | 1.0271 | 4.87% |
| -20.00 | 0.998 | 0.992 | 0.002 | 0.008 | 1.0146 | 1.0101 | 0.44% |
| -20.00 | 1.000 | 1.000 | 0.000 | 0.000 | 1.0086 | 1.0086 | 0.00% |
| 0.00 | 0.000 | 0.000 | 1.000 | 1.000 | 7.6333 | 7.6333 | 0.00% |
| 0.00 | 0.100 | 0.055 | 0.900 | 0.945 | 7.2931 | 6.9946 | 4.09% |
| 0.00 | 0.118 | 0.065 | 0.882 | 0.935 | 7.2309 | 6.8717 | 4.97% |
| 0.00 | 0.120 | 0.066 | 0.880 | 0.934 | 7.2239 | 6.8579 | 5.07% |
| 0.00 | 0.200 | 0.108 | 0.800 | 0.892 | 6.9425 | 6.3028 | 9.21% |
| 0.00 | 0.300 | 0.160 | 0.700 | 0.840 | 6.5774 | 5.6344 | 14.34% |
| 0.00 | 0.400 | 0.216 | 0.600 | 0.784 | 6.1920 | 5.0379 | 18.64% |
| 0.00 | 0.500 | 0.278 | 0.500 | 0.722 | 5.7784 | 4.5261 | 21.67% |
| 0.00 | 0.600 | 0.350 | 0.400 | 0.650 | 5.3276 | 4.0934 | 23.17% |
| 0.00 | 0.700 | 0.439 | 0.300 | 0.561 | 4.8291 | 3.7277 | 22.81% |
| 0.00 | 0.800 | 0.557 | 0.200 | 0.443 | 4.2712 | 3.4172 | 19.99% |
| 0.00 | 0.900 | 0.727 | 0.100 | 0.273 | 3.6405 | 3.1515 | 13.43% |
| 0.00 | 0.970 | 0.901 | 0.030 | 0.099 | 3.1479 | 2.9876 | 5.09% |
| 0.00 | 0.972 | 0.907 | 0.028 | 0.093 | 3.1331 | 2.9832 | 4.79% |
| 0.00 | 0.998 | 0.993 | 0.002 | 0.007 | 2.9376 | 2.9266 | 0.38% |
| | 1.000 | 1.000 | 0.000 | 0.000 | 2.9223 | 2.9223 | 0.00% |
| 20.00 | 0.000 | 0.000 | 1.000 | 1.000 | 17.7440 | 17.7440 | 0.00% |
| 20.00 | 0.002 | 0.001 | 0.998 | 0.999 | 17.7284 | 17.7172 | 0.06% |
| 20.00 | 0.100 | 0.057 | 0.900 | 0.943 | 16.9549 | 16.3154 | 3.77% |
| 20.00 | 0.200 | 0.112 | 0.800 | 0.888 | 16.1417 | 14.7991 | 8.32% |
| 20.00 | 0.300 | 0.167 | 0.700 | 0.833 | 15.2965 | 13.3341 | 12.83% |
| 20.00 | 0.400 | 0.226 | 0.600 | 0.774 | 14.4073 | 12.0106 | 16.64% |
| 20.00 | 0.500 | 0.291 | 0.500 | 0.709 | 13.4592 | 10.8580 | 19.33% |
| 20.00 | 0.600 | 0.367 | 0.400 | 0.633 | 12.4347 | 9.8696 | 20.63% |
| 20.00 | 0.700 | 0.459 | 0.300 | 0.541 | 11.3136 | 9.0247 | 20.23% |
| 20.00 | 0.800 | 0.578 | 0.200 | 0.422 | 10.0734 | 8.3003 | 17.60% |
| 20.00 | 0.900 | 0.744 | 0.100 | 0.256 | 8.6893 | 7.6758 | 11.66% |
| 20.00 | 0.964 | 0.893 | 0.036 | 0.107 | 7.7153 | 7.3203 | 5.12% |
| 20.00 | 0.966 | 0.899 | 0.034 | 0.101 | 7.6836 | 7.3097 | 4.87% |
| 20.00 | 0.998 | 0.994 | 0.002 | 0.006 | 7.1667 | 7.1438 | 0.32% |
| 20.00 | 1.000 | 1.000 | 0.000 | 0.000 | 7.1337 | 7.1337 | 0.00% |
| 29.93 | 0.000 | 0.000 | 1.000 | 1.000 | 25.7347 | 25.7347 | 0.00% |
| 29.93 | 0.002 | 0.001 | 0.998 | 0.999 | 25.7122 | 25.6964 | 0.06% |
| 29.93 | 0.100 | 0.058 | 0.900 | 0.942 | 24.5914 | 23.7058 | 3.60% |
| 29.93 | 0.132 | 0.076 | 0.868 | 0.924 | 24.2187 | 23.0247 | 4.93% |
| 29.93 | 0.134 | 0.077 | 0.866 | 0.923 | 24.1952 | 22.9819 | 5.01% |
| 29.93 | 0.200 | 0.114 | 0.800 | 0.886 | 23.4135 | 21.5692 | 7.88% |
| 29.93 | 0.300 | 0.171 | 0.700 | 0.829 | 22.1903 | 19.5038 | 12.11% |
| 29.93 | 0.400 | 0.231 | 0.600 | 0.769 | 20.9059 | 17.6272 | 15.68% |
| 29.93 | 0.500 | 0.298 | 0.500 | 0.702 | 19.5407 | 15.9815 | 18.21% |
| 29.93 | 0.600 | 0.375 | 0.400 | 0.625 | 18.0715 | 14.5608 | 19.43% |
| 29.93 | 0.700 | 0.469 | 0.300 | 0.531 | 16.4722 | 13.3397 | 19.02% |
| 29.93 | 0.800 | 0.589 | 0.200 | 0.411 | 14.7134 | 12.2880 | 16.48% |
| 29.93 | 0.900 | 0.753 | 0.100 | 0.247 | 12.7629 | 11.3779 | 10.85% |
| 29.93 | 0.960 | 0.887 | 0.040 | 0.113 | 11.4861 | 10.8896 | 5.19% |
| 29.93 | 0.962 | 0.892 | 0.038 | 0.108 | 11.4420 | 10.8740 | 4.96% |
| 29.93 | 0.998 | 0.994 | 0.002 | 0.006 | 10.6315 | 10.6003 | 0.29% |
| 29.93 | 1.000 | 1.000 | 0.000 | 0.000 | 10.5854 | 10.5854 | |
| 40.00 | 0.000 | 0.000 | 1.000 | 1.000 | 36.2187 | 36.2187 | 0.00% |
| 40.00 | 0.002 | 0.001 | 0.998 | 0.999 | 36.1870 | 36.1656 | 0.06% |
| 40.00 | 0.100 | 0.059 | 0.900 | 0.941 | 34.6109 | 33.4249 | 3.43% |
| 40.00 | 0.140 | 0.082 | 0.860 | 0.918 | 33.9549 | 32.2577 | 5.00% |
| 40.00 | 0.142 | 0.083 | 0.858 | 0.917 | 33.9218 | 32.1991 | 5.08% |
| 40.00 | 0.200 | 0.116 | 0.800 | 0.884 | 32.9548 | 30.5018 | 7.44% |
| 40.00 | 0.300 | 0.175 | 0.700 | 0.825 | 31.2365 | 27.6736 | 11.41% |
| 40.00 | 0.400 | 0.237 | 0.600 | 0.763 | 29.4360 | 25.0900 | 14.76% |
| 40.00 | 0.500 | 0.305 | 0.500 | 0.695 | 27.5282 | 22.8091 | 17.14% |
| 40.00 | 0.600 | 0.384 | 0.400 | 0.616 | 25.4838 | 20.8277 | 18.27% |
| 40.00 | 0.700 | 0.479 | 0.300 | 0.521 | 23.2696 | 19.1153 | 17.85% |
| 40.00 | 0.800 | 0.599 | 0.200 | 0.401 | 20.8490 | 17.6340 | 15.42% |
| 40.00 | 0.900 | 0.761 | 0.100 | 0.239 | 18.1816 | 16.3474 | 10.09% |
| 40.00 | 0.958 | 0.887 | 0.042 | 0.113 | 16.5045 | 15.6778 | 5.01% |
| 40.00 | 0.960 | 0.892 | 0.040 | 0.108 | 16.4448 | 15.6556 | 4.80% |
| 40.00 | 0.998 | 0.994 | 0.002 | 0.006 | 15.2863 | 15.2450 | 0.27% |
| 40.00 | 1.000 | 1.000 | 0.000 | 0.000 | 15.2240 | 15.2240 | 0.00% |
| 60.00 | 0.000 | 0.000 | 1.000 | 1.000 | 66.7688 | 66.7688 | 0.00% |
| 60.00 | 0.002 | 0.001 | 0.998 | 0.999 | 66.7103 | 66.6745 | 0.05% |
| 60.00 | 0.100 | 0.061 | 0.900 | 0.939 | 63.8046 | 61.8505 | 3.06% |
| 60.00 | 0.154 | 0.094 | 0.846 | 0.906 | 62.1686 | 59.0973 | 4.94% |
| 60.00 | 0.156 | 0.095 | 0.844 | 0.905 | 62.1075 | 58.9951 | 5.01% |
| 60.00 | 0.200 | 0.122 | 0.800 | 0.878 | 60.7530 | 56.7525 | 6.58% |
| 60.00 | 0.300 | 0.183 | 0.700 | 0.817 | 57.5940 | 51.8058 | 10.05% |
| 60.00 | 0.400 | 0.249 | 0.600 | 0.751 | 54.2984 | 47.2405 | 13.00% |
| 60.00 | 0.500 | 0.321 | 0.500 | 0.679 | 50.8292 | 43.1587 | 15.09% |
| 60.00 | 0.600 | 0.402 | 0.400 | 0.598 | 47.1437 | 39.5701 | 16.07% |
| 60.00 | 0.700 | 0.499 | 0.300 | 0.501 | 43.1938 | 36.4366 | 15.64% |
| 60.00 | 0.800 | 0.619 | 0.200 | 0.381 | 38.9270 | 33.7028 | 13.42% |
| 60.00 | 0.900 | 0.777 | 0.100 | 0.223 | 34.2865 | 31.3120 | 8.68% |
| 60.00 | 0.948 | 0.874 | 0.052 | 0.126 | 31.9089 | 30.2707 | 5.13% |
| 60.00 | 0.950 | 0.878 | 0.050 | 0.122 | 31.8075 | 30.2287 | 4.96% |
| 60.00 | 0.998 | 0.995 | 0.002 | 0.005 | 29.3184 | 29.2517 | 0.23% |
| 60.00 | 1.000 | 1.000 | 0.000 | 0.000 | 29.2123 | 29.2123 | 0.00% |
| 80.00 | 0.000 | 0.000 | 1.000 | 1.000 | 113.6113 | 113.6113 | 0.00% |
| 80.00 | 0.002 | 0.001 | 0.998 | 0.999 | 113.5114 | 113.4575 | 0.05% |
| 80.00 | 0.100 | 0.064 | 0.900 | 0.936 | 108.5492 | 105.6388 | 2.68% |
| 80.00 | 0.176 | 0.113 | 0.824 | 0.887 | 104.6058 | 99.3861 | 4.99% |
| 80.00 | 0.178 | 0.114 | 0.822 | 0.886 | 104.5008 | 99.2215 | 5.05% |
| 80.00 | 0.200 | 0.128 | 0.800 | 0.872 | 103.3418 | 97.4158 | 5.73% |
| 80.00 | 0.300 | 0.193 | 0.700 | 0.807 | 97.9667 | 89.4034 | 8.74% |
| 80.00 | 0.400 | 0.262 | 0.600 | 0.738 | 92.3874 | 81.9355 | 11.31% |
| 80.00 | 0.500 | 0.337 | 0.500 | 0.663 | 86.5569 | 75.1801 | 13.14% |
| 80.00 | 0.600 | 0.422 | 0.400 | 0.578 | 80.4199 | 69.1746 | 13.98% |
| 80.00 | 0.700 | 0.520 | 0.300 | 0.480 | 73.9150 | 63.8800 | 13.58% |
| 80.00 | 0.800 | 0.640 | 0.200 | 0.360 | 66.9753 | 59.2239 | 11.57% |
| 80.00 | 0.900 | 0.793 | 0.100 | 0.207 | 59.5304 | 55.1252 | 7.40% |
| 80.00 | 0.938 | 0.864 | 0.062 | 0.136 | 56.5536 | 53.6975 | 5.05% |
| 80.00 | 0.940 | 0.868 | 0.060 | 0.132 | 56.3946 | 53.6242 | 4.91% |
| 80.00 | 0.998 | 0.995 | 0.002 | 0.005 | 51.6732 | 51.5747 | 0.19% |
| | 1.000 | 1.000 | 0.000 | 0.000 | 51.5065 | 51.5065 | |
| 100.00 | 0.000 | 0.000 | 1.000 | 1.000 | 181.5097 | 181.5097 | 0.00% |
| 100.00 | 0.002 | 0.001 | 0.998 | 0.999 | 181.3487 | 181.2754 | 0.04% |
| 100.00 | 0.100 | 0.068 | 0.900 | 0.932 | 173.3471 | 169.3983 | 2.28% |
| 100.00 | 0.200 | 0.136 | 0.800 | 0.864 | 164.9587 | 156.9132 | 4.88% |
| 100.00 | 0.204 | 0.138 | 0.796 | 0.862 | 164.6184 | 156.4152 | 4.98% |
| 100.00 | 0.206 | 0.140 | 0.794 | 0.860 | 164.4481 | 156.1664 | 5.04% |
| 100.00 | 0.300 | 0.205 | 0.700 | 0.795 | 156.3322 | 144.6793 | 7.45% |
| 100.00 | 0.400 | 0.277 | 0.600 | 0.723 | 147.4334 | 133.1677 | 9.68% |
| 100.00 | 0.500 | 0.355 | 0.500 | 0.645 | 138.2123 | 122.6421 | 11.27% |
| 100.00 | 0.600 | 0.442 | 0.400 | 0.558 | 128.6074 | 113.1890 | 11.99% |
| 100.00 | 0.700 | 0.542 | 0.300 | 0.458 | 118.5491 | 104.7811 | 11.61% |
| 100.00 | 0.800 | 0.661 | 0.200 | 0.339 | 107.9624 | 97.3327 | 9.85% |
| 100.00 | 0.900 | 0.808 | 0.100 | 0.192 | 96.7681 | 90.7369 | 6.23% |
| 100.00 | 0.924 | 0.849 | 0.076 | 0.151 | 93.9821 | 89.2685 | 5.02% |
| 100.00 | 0.926 | 0.853 | 0.074 | 0.147 | 93.7481 | 89.1481 | 4.91% |
| 100.00 | 0.998 | 0.996 | 0.002 | 0.004 | 85.1302 | 84.9957 | 0.16% |
| 100.00 | 1.000 | 1.000 | 0.000 | 0.000 | 84.8853 | 84.8853 | 0.00% |
| 120.00 | 0.000 | 0.000 | 1.000 | 1.000 | 276.0074 | 276.0074 | 0.00% |
| 120.00 | 0.002 | 0.001 | 0.998 | 0.999 | 275.7583 | 275.6697 | 0.03% |
| 120.00 | 0.100 | 0.073 | 0.900 | 0.927 | 263.3647 | 258.5244 | 1.84% |
| 120.00 | 0.200 | 0.145 | 0.800 | 0.855 | 250.3842 | 240.4131 | 3.98% |
| 120.00 | 0.246 | 0.179 | 0.754 | 0.821 | 244.3120 | 232.1144 | 4.99% |
| 120.00 | 0.248 | 0.180 | 0.752 | 0.820 | 244.0466 | 231.7560 | 5.04% |
| 120.00 | 0.300 | 0.218 | 0.700 | 0.782 | 237.1040 | 222.5367 | 6.14% |
| 120.00 | 0.400 | 0.294 | 0.600 | 0.706 | 223.5188 | 205.5642 | 8.03% |
| 120.00 | 0.500 | 0.376 | 0.500 | 0.624 | 209.5934 | 189.8986 | 9.40% |
| 120.00 | 0.600 | 0.465 | 0.400 | 0.535 | 195.2721 | 175.7050 | 10.02% |
| 120.00 | 0.700 | 0.565 | 0.300 | 0.435 | 180.4862 | 162.9836 | 9.70% |
| 120.00 | 0.800 | 0.682 | 0.200 | 0.318 | 165.1587 | 151.6417 | 8.18% |
| 120.00 | 0.900 | 0.823 | 0.100 | 0.177 | 149.2079 | 141.5453 | 5.14% |
| 120.00 | 0.902 | 0.826 | 0.098 | 0.174 | 148.8820 | 141.3551 | 5.06% |
| 120.00 | 0.904 | 0.829 | 0.096 | 0.171 | 148.5557 | 141.1653 | 4.97% |
| 120.00 | 0.998 | 0.996 | 0.002 | 0.004 | 132.8909 | 132.7203 | 0.13% |
| | 1.000 | 1.000 | 0.000 | 0.000 | 132.5503 | 132.5503 | |
| 140.00 | 0.000 | 0.000 | 1.000 | 1.000 | 403.8797 | 403.8797 | 0.00% |
| 140.00 | 0.002 | 0.002 | 0.998 | 0.998 | 403.5025 | 403.4156 | 0.02% |
| 140.00 | 0.100 | 0.080 | 0.900 | 0.920 | 384.6271 | 379.5635 | 1.32% |
| 140.00 | 0.200 | 0.158 | 0.800 | 0.842 | 364.8595 | 354.0001 | 2.98% |
| 140.00 | 0.300 | 0.236 | 0.700 | 0.764 | 344.8410 | 328.5830 | 4.71% |
| 140.00 | 0.316 | 0.248 | 0.684 | 0.752 | 341.6231 | 324.6035 | 4.98% |
| 140.00 | 0.318 | 0.250 | 0.682 | 0.750 | 341.2206 | 324.1083 | 5.02% |
| 140.00 | 0.400 | 0.316 | 0.600 | 0.684 | 324.6726 | 304.3234 | 6.27% |
| 140.00 | 0.500 | 0.400 | 0.500 | 0.600 | 304.3601 | 281.8149 | 7.41% |
| 140.00 | 0.600 | 0.491 | 0.400 | 0.509 | 283.8567 | 261.3120 | 7.94% |
| 140.00 | 0.700 | 0.591 | 0.300 | 0.409 | 263.0876 | 242.8404 | 7.70% |
| 140.00 | 0.800 | 0.705 | 0.200 | 0.295 | 241.9640 | 226.2934 | 6.48% |
| 140.00 | 0.866 | 0.791 | 0.134 | 0.209 | 227.7826 | 216.3456 | 5.02% |
| 140.00 | 0.868 | 0.793 | 0.132 | 0.207 | 227.3495 | 216.0555 | 4.97% |
| 140.00 | 0.900 | 0.839 | 0.100 | 0.161 | 220.3917 | 211.5016 | 4.03% |
| 140.00 | 0.998 | 0.996 | 0.002 | 0.004 | 198.7235 | 198.5256 | 0.10% |
| | 1.000 | 1.000 | 0.000 | 0.000 | 198.2752 | 198.2752 | 0.00% |

The model was run for the Z-1233zd/HFC-245fa system at atmospheric pressure over the range of liquid mole percents of Z=1233zd from 0 to 1 in increments of 0.002. The abridged results are presented in Table 4.3, wherein compositions that meet the near-azeotropic criterion ([(BP-VP)/BP] x 100 ≤ 5) are displayed. Results are given in liquid mole fractional increments of 0.100 up to the point of criterion failure.

**Table 4.3. Near-Azeotropes of the Z-1233zd/HFC245fa System at 1 Atm.**

| **Pressure (atm)** | **Temp. (deg. C)** | **Liquid mol. frac. Z-1233zd** | **Vapor mol. frac. Z-1233zd** | **Liquid mol. frac. HFC-245fa** | **Vapor mol. frac. HFC-245fa** | **Bubble Point Pressure (psia)** | **Dew Point Pressure (psia)** | **[(BP-DP)/ BP] x 100** |
|---|---|---|---|---|---|---|---|---|
| 1.00 | 15.222 | 0.000 | 0.000 | 1.000 | 1.000 | 14.6960 | 14.6960 | 0.00% |
| 1.00 | 15.244 | 0.002 | 0.001 | 0.998 | 0.999 | 14.6960 | 14.6865 | 0.06% |
| 1.00 | 16.358 | 0.100 | 0.056 | 0.900 | 0.944 | 14.6960 | 14.1328 | 3.83% |
| 1.00 | 16.670 | 0.126 | 0.071 | 0.874 | 0.929 | 14.6960 | 13.9630 | 4.99% |
| 1.00 | 16.694 | 0.128 | 0.072 | 0.872 | 0.928 | 14.6960 | 13.9496 | 5.08% |
| 1.00 | 17.598 | 0.200 | 0.111 | 0.800 | 0.889 | 14.6960 | 13.4580 | 8.42% |
| 1.00 | 18.969 | 0.300 | 0.167 | 0.700 | 0.833 | 14.6960 | 12.7996 | 12.90% |
| 1.00 | 20.514 | 0.400 | 0.226 | 0.600 | 0.774 | 14.6960 | 12.2585 | 16.59% |
| 1.00 | 22.289 | 0.500 | 0.293 | 0.500 | 0.707 | 14.6960 | 11.8936 | 19.07% |
| 1.00 | 24.377 | 0.600 | 0.370 | 0.400 | 0.630 | 14.6960 | 11.7423 | 20.10% |
| 1.00 | 26.890 | 0.700 | 0.466 | 0.300 | 0.534 | 14.6960 | 11.8462 | 19.39% |
| 1.00 | 29.987 | 0.800 | 0.588 | 0.200 | 0.412 | 14.6960 | 12.2729 | 16.49% |
| 1.00 | 33.905 | 0.900 | 0.756 | 0.100 | 0.244 | 14.6960 | 13.1456 | 10.55% |
| 1.00 | 36.686 | 0.958 | 0.885 | 0.042 | 0.115 | 14.6960 | 13.9403 | 5.14% |
| 1.00 | 36.790 | 0.960 | 0.890 | 0.040 | 0.110 | 14.6960 | 13.9725 | 4.92% |
| 1.00 | 38.880 | 0.998 | 0.994 | 0.002 | 0.006 | 14.6960 | 14.6559 | 0.27% |
| 1.00 | 38.996 | 1.000 | 1.000 | 0.000 | 0.000 | 14.6960 | 14.6960 | 0.00% |

The data in Tables 4.2 and 4.3 are broadly summarized in Tables 4.4 and 4.5 below. The broad ranges of azeotrope-like compositions (based on [(BP-VP)/BP] x 100 ≤ 5) are summarized in Table 4.4, and compositions that meet the 3% near-azeotropic criterion ([(BP-VP)/BP] x 100 ≤ 3) are summarized in Table 4.5.

**Table 4.4. Summarized Near-Azeotropes of the Z-1233zd/HFC-245fa System.**

| **Components** | **T (°C)** | **Z-1233zd/H FC-245fa Liquid Mole Percentage Range** |
|---|---|---|
| Z-1233zd / HFC-245fa | -40 | 1-10 / 99-90 |
| | | 98-99 /2-1 |
| Z-1233zd / HFC-245fa | -20 | 1-11 / 99-89 |
| | | 98-99 / 2-1 |
| Z-1233zd / HFC-245fa | 0 | 1-11 / 99-89 |
| Z-1233zd / HFC-245fa | 20 | 1-12 / 99-88 |
| | | 97-99 / 3-1 |
| Z-1233zd / HFC-245fa | 30.02 | 1-13 / 99-87 |
| | | 97-99 / 3-1 |
| Z-1233zd / HFC-245fa | 40 | 1-14 / 99-86 |
| | | 96-99 /4-1 |
| Z-1233zd / HFC-245fa | 60 | 1-15 / 99-85 |
| | | 95-99 / 5-1 |
| Z-1233zd / HFC-245fa | 80 | 1-17 / 99-83 |
| | | 93-99 / 7-1 |
| Z-1233zd / HFC-245fa | 100 | 1-20 / 99-80 |
| | | 92-99 / 8-1 |
| Z-1233zd / HFC-245fa | 120 | 1-24 / 99-76 |
| | | 91-99 / 9-1 |
| Z-1233zd / HFC-245fa | 140 | 1-31 / 99-69 |
| | | 87-99 / 13-1 |

**Table 4.5. Summarized 3% Near-Azeotropes of the Z-1233zd/HFC-245fa System.**

| **Components** | **T (°C)** | **Z-1233zd/H FC-245fa Liquid Mole Percentage Range** |
|---|---|---|
| Z-1233zd / HFC-245fa | -40 | 1-7 / 99-93 |
| Z-1233zd / HFC-245fa | -20 | 1-7 / 99-93 |
| Z-1233zd / HFC-245fa | 0 | 1-7 / 99-93 |
| Z-1233zd / HFC-245fa | 20 | 1-8 / 99-92 |
| | | 98-99/2-1 |
| Z-1233zd / HFC-245fa | 30.02 | 1-8 / 99-92 |
| | | 98-99/2-1 |
| Z-1233zd / HFC-245fa | 40 | 1-8 / 99-92 |
| | | 98-99/2-1 |
| Z-1233zd / HFC-245fa | 60 | 1-9 / 99-91 |
| | | 98-99/2-1 |
| Z-1233zd / HFC-245fa | 80 | 1-11 / 99-89 |
| | | 97-99 / 3-1 |
| Z-1233zd / HFC-245fa | 100 | 1-12/ 99-88 |
| | | 96-99 / 4-1 |
| Z-1233zd / HFC-245fa | 120 | 1-15 / 99-85 |
| | | 95-99 / 5-1 |
| Z-1233zd / HFC-245fa | 140 | 1-20 / 99-80 |
| | | 94-99 / 6-1 |

At atmospheric pressure, near azeotropic compositions were predicted at Z-1233zd to HFC-245fa mole percentage ratios of 1-12 / 99-88 and 96-99 /4-1 Z-1233zd liquid mole percent. 3% near azeotropic compositions were predicted at 1-8 / 99-92 and 98-99 / 2-1.

All references cited herein are incorporated in their entirety.

Those of skill in the art will understand that the invention is not limited to the scope of only those specific embodiments described herein, but rather extends to all equivalents, variations and extensions thereof.

The following represent preferred items of the present invention:
1. A composition comprising Z-1233zd and a second component,
   wherein said second component is selected from the group consisting of:
      (a) Methyl formate;
      (b) Dimethoxymethane;
      (c) HFC-43-10-mee; and,
      (d) HFC-245fa,
   wherein the second component is present in an effective amount to form an azeotrope or azeotrope-like mixture with the Z-1233zd.
2. The azeotrope-like composition of item 1, comprising from 1 to 99 mole % Z-1233zd and from 99 mole % to 1 mole percent methylformate at a temperature of from -40 C to 140 C.
3. The azeotropic or azeotrope-like composition of item 1, comprising from 38.0 to 47.1 mole % Z-1233zd and from 53.9 mole % to 62.0 mole % dimethoxymethane.
4. The composition of item 3, wherein the vapor pressure is from 0.18 psia to 174.86 psia, at a temperature of from -40 C to 140 C.
5. The azeotrope-like composition of item 1, comprising 1 to 99 mole % 1233zd and from 99 mole % to 1 mole percent % dimethoxymethane at a temperature of from -40 C to 140 C.
6. The azeotropic or azeotrope-like composition of item 1, comprising from 1 to 5 mole % and from 78 to 99 mole % 1233zd and from 99 to 95 mole percent and 1 to 22 mole percent HFC-43-10mee at a temperature of from -40 C to 140 C.
7. The azeotropic or azeotrope-like composition of item 1, comprising from 1 to 12 mole % and from 96 to 99 mole % 1233zd and from 99 to 88 mole percent and 1 to 4 mole percent HFC-245fa at a temperature of from -40 C to 140 C.
8. The composition according to Item 1 further comprising an additive selected from the group consisting of lubricants, pour point modifiers, anti-foam agents, viscosity improvers, emulsifiers dispersants, oxidation inhibitors, extreme pressure agents, corrosion inhibitors, detergents, catalysts, surfactants, flame retardants, preservatives, colorants, antioxidants, reinforcing agents, fillers, antistatic agents, solubilizing agents, IR attenuating agents, nucleating agents, cell controlling agents, extrusion aids, stabilizing agents, thermally insulating agents, plasticizers, viscosity modifiers, impact modifiers, gas barrier resins, polymer modifiers, rheology modifiers, antibacterial agents, vapor pressure modifiers, UV absorbers, cross-linking agents, permeability modifiers, bitterants, propellants and acid catchers.
9. A process of forming a foam comprising:
   (a) adding a foamable composition to a blowing agent; and,
   (b) reacting said foamable composition under conditions effective to form a foam,
   wherein said blowing agent comprises the composition according to Item 1.
10. A foam formed by the process according to Item 9.
11. A foam comprising a polymer and the composition according to Item 1.
12. A pre-mix composition comprising a foamable component and a blowing agent, said blowing agent comprising the composition according to Item 1.
13. A process for producing refrigeration comprising;
   (a) condensing the composition according to Item 1; and,
   (b) evaporating said composition in the vicinity of a body to be cooled.
14. A heat transfer system comprising a heat transfer medium, wherein said heat transfer medium comprises the composition according to Item 1.
15. A method of cleaning a surface comprising bringing the composition according to Item 1 into contact with said surface.
16. An aerosol product comprising a component to be dispensed and a propellant, wherein said propellant comprises the composition according to Item 1.
17. A method for extinguishing or suppressing a flame comprising dispensing the composition according to Item 1 at said flame.
18. A system for preventing or suppressing a flame comprising a vessel containing the composition according to Item 1 and a nozzle to dispense said composition toward an anticipated or actual location of said flame.
19. A process for dissolving a solute comprising contacting and mixing said solute with a sufficient quantity of the composition according to Item 1.
20. A method for preventing or rapidly quenching an electric discharge in a space in a high voltage device comprising injecting a gaseous dielectric into said space, wherein said gaseous dielectric comprises the composition according to Item 1.
21. A high voltage device comprising a gaseous dielectric, wherein said gaseous dielectric comprises the composition according to Item 1.
22. The high voltage device according to Item 21 selected from the group consisting of a transformer, a circuit breaker, a switch and a radar waveguide.

## Claims

1. A composition comprising Z-1233zd and a second component,
wherein said second component is selected from the group consisting of:
(a) methyl formate;
(b) HFC-43-10-mee; and
(c) HFC-245fa,
wherein the second component is present in an effective amount to form an azeotrope or azeotrope-like mixture with the Z-1233zd.

2. The azeotrope-like composition of claim 1, comprising from 1 mole % to 99 mole % Z-1233zd and from 99 mole % to 1 mole % methyl formate at a temperature of from -40 °C to 140 °C.

3. The azeotropic or azeotrope-like composition of claim 1, comprising from 1 mole % to 5 mole % Z-1233zd and from 99 to 95 mole % HFC-43-10mee at a temperature of from -40 °C to 140 °C.

4. The azeotropic or azeotrope-like composition of claim 1, comprising from 78 mole % to 99 mole % Z-1233zd and from 1 mole % to 22 mole % HFC-43-10mee at a temperature of from -40 °C to 140 °C.

5. The azeotropic or azeotrope-like composition of claim 1, comprising from 1 mole % to 12 mole % Z-1233zd and from 99 mole % to 88 mole % HFC-245fa at a temperature of from -40 °C to 140 °C.

6. The azeotropic or azeotrope-like composition of claim 1, comprising from 96 mole % to 99 mole % Z-1233zd and from 1 mole % to 4 mole % HFC-245fa at a temperature of from -40 °C to 140 °C.

7. The composition according to any one of claims 1 to 6 further comprising an additive selected from the group consisting of lubricants, pour point modifiers, anti-foam agents, viscosity improvers, emulsifiers dispersants, oxidation inhibitors, extreme pressure agents, corrosion inhibitors, detergents, catalysts, surfactants, flame retardants, preservatives, colorants, antioxidants, reinforcing agents, fillers, antistatic agents, solubilizing agents, IR attenuating agents, nucleating agents, cell controlling agents, extrusion aids, stabilizing agents, thermally insulating agents, plasticizers, viscosity modifiers, impact modifiers, gas barrier resins, polymer modifiers, rheology modifiers, antibacterial agents, vapor pressure modifiers, UV absorbers, cross-linking agents, permeability modifiers, bitterants, propellants and acid catchers.

8. A process of forming a foam comprising:
(a) adding a foamable composition to a blowing agent; and
(b) reacting said foamable composition under conditions effective to form a foam,
wherein said blowing agent comprises the composition according to any one of claims 1 to 6.

9. A foam formed by the process according to claim 8.

10. A foam comprising a polymer and the composition according to any one of claims 1 to 6.

11. A process for producing refrigeration comprising;
(a) condensing the composition according to any one of claims 1 to 6; and
(b) evaporating said composition in the vicinity of a body to be cooled.

12. A heat transfer system comprising a heat transfer medium, wherein said heat transfer medium comprises the composition according to any one of claims 1 to 6.

13. A method of cleaning a surface comprising bringing the composition according to any one of claims 1 to 6 into contact with said surface.

14. An aerosol product comprising a component to be dispensed and a propellant, wherein said propellant comprises the composition according to any one of claims 1 to 6.

15. A method for extinguishing or suppressing a flame comprising dispensing the composition according to any one of claims 1 to 6 at said flame.

16. A system for preventing or suppressing a flame comprising a vessel containing the composition according to any one of claims 1 to 6 and a nozzle to dispense said composition toward an anticipated or actual location of said flame.

17. A process for dissolving a solute comprising contacting and mixing said solute with a sufficient quantity of the composition according to any one of claims 1 to 6.

18. A method for preventing or rapidly quenching an electric discharge in a space in a high voltage device comprising injecting a gaseous dielectric into said space, wherein said gaseous dielectric comprises the composition according to any one of claims 1 to 6.

19. A high voltage device comprising a gaseous dielectric, wherein said gaseous dielectric comprises the composition according to any one of claims 1 to 6, wherein the high voltage device is preferably selected from the group consisting of a transformer, a circuit breaker, a switch, and a radar waveguide.
